# EUROPEAN PATENT APPLICATION

(11) **EP 4 773 536 A1**
(43) Date of publication of application: **08.07.2026**
(21) Application number: 23950048.1
(22) Date of filing: 28.08.2023
(51) Int. Cl.: H04L 5/00, H04L 25/03, H04L 1/00, H04W 84/12

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: LI, Yapu, Dongguan, Guangdong 523860 (CN); LUO, Chaoming, Dongguan, Guangdong 523860 (CN); GAO, Ning, Dongguan, Guangdong 523860 (CN); ZHANG, Jun, Dongguan, Guangdong 523860 (CN)
(74) Representative: RGTH
(86) International application number: PCT/CN2023/115325
(87) International publication number: WO 2025/043454

(57) **Abstract**

Provided in the present application are a wireless communication method and a communication device. The method comprises: a first device sending first indication information to a second device, wherein the second device sends data to a target user by means of multi-AP joint transmission, and the first indication information is used for indicating a scrambling initial value of a first PPDU for multi-AP joint transmission. When multi-AP joint transmission is performed, one or more APs (comprising a second device) that receive first indication information can set the same scrambling initial value for the same target user on the basis of the first indication information, such that scrambling initial values of PPDUs sent to the same target user are the same, and the target user can thus correctly decode the PPDUs.

## Description

### TECHNICAL FIELD

This application relates to the field of communications technologies, and more specifically, to a wireless communications method and a communications device.

### BACKGROUND

With development of technologies, some communications standards (for example, IEEE 802.11 UHR (Wi-Fi 8)) propose technical solutions for access point (access point, AP) collaboration. Multi-AP collaboration may allow multiple APs to share transmission resources to improve transmission resource utilization. However, in a multi-AP coordination scenario, a data transmission process has some problems.

### SUMMARY

This application provides a wireless communications method and a communications device. The following describes the aspects related to this application.

According to a first aspect, a wireless communication method is provided. The method includes: sending, by a first device, first indication information to a second device. The second device sends data to the target user by means of multi-AP joint transmission, and the first indication information is used to indicate a scrambling initial value of a first physical layer protocol data unit (physical layer protocol data unit, PPDU) sent by the multi-AP joint transmission.

According to a second aspect, a wireless communication method is provided. The method includes: receiving, by a second device, first indication information sent by a first device. The second device sends data to the target user by means of multi-AP joint transmission, and the first indication information is used to indicate a scrambling initial value of a first PPDU sent by the multi-AP joint transmission.

According to a third aspect, a communications device is provided. The communications device is a first device. The communications device includes: a sending unit, configured to send first indication information to a second device. The second device sends data to the target user by means of multi-AP joint transmission, and the first indication information is used to indicate a scrambling initial value of a first PPDU sent by the multi-AP joint transmission.

According to a fourth aspect, a communications device is provided. The communications device is a second device. The communications device includes a receiving unit, configured to receive first indication information sent by a first device. The second device sends data to the target user by means of multi-AP joint transmission, and the first indication information is used to indicate a scrambling initial value of a first PPDU sent by the multi-AP joint transmission.

According to a fifth aspect, a communications device is provided, including a processor and a memory, where the memory is configured to store one or more computer programs, and the processor is configured to invoke the computer program in the memory so that the communications device performs some or all of the steps in the method in the first aspect and/or the second aspect.

According to a sixth aspect, an embodiment of this application provides a communications system, and the system includes the foregoing communications device. In another possible design, the system may further include another device that interacts with the communications device in the solution provided in this embodiment of this application.

According to a seventh aspect, an embodiment of this application provides a computer readable storage medium, where the computer readable storage medium stores a computer program, and the computer program causes a communications device to perform some or all of the steps in the methods in the foregoing aspects.

According to an eighth aspect, an embodiment of this application provides a computer program product, where the computer program product includes a non-transitory computer readable storage medium that stores a computer program, and the computer program may be operated to enable a communications device to perform some or all of the steps in the methods in the foregoing aspects. In some implementations, the computer program product may be a software installation package.

According to a ninth aspect, an embodiment of this application provides a chip, where the chip includes a memory and a processor, and the processor may invoke and run a computer program from the memory, so as to implement some or all of the steps described in the methods in the foregoing aspects.

In a case of multi-AP joint transmission, one or more APs (including the second device) that receive the first indication information may set a proper scrambling initial value for a same target user according to the first indication information, so that scrambling initial values of PPDUs sent to a same target user meets a requirement of multi-AP joint transmission, so that the target user can correctly decode the PPDUs.

### BRIEF DESCRIPTION OF DRAWINGS

FIG. 1 is a schematic diagram of a wireless communications system to which embodiments of this application are applicable.
FIG. 2 is an example diagram of a format of a very high-throughput (very high-throughput, VHT) PPDU.
FIG. 3A is an example diagram of a format of a high-efficiency (HE) single user (SU) PPDU.
FIG. 3B is an example diagram of a format of an HE extended distance (extended range, ER) SU PPDU.
FIG. 3C is an example diagram of a format of an HE multi-user (multi user, MU) PPDU.
FIG. 4 is an example diagram of a format of an extremely high throughput (extremely high throughput, EHT) MU PPDU.
FIG. 5A is an example diagram of an ultra-high reliability (ultra-high reliability, UHR) MU PPDU format.
FIG. 5B is an example diagram of a UHR trigger based (trigger based, TB) PPDU format.
FIG. 6 is an example diagram of an AP candidate set.
FIG. 7 is an example of a scenario of multi-AP joint transmission.
FIG. 8A is an example diagram of a process of multi-AP joint transmission to a single user according to an embodiment of this application.
FIG. 8B is an example diagram of a process of multi-AP joint transmission to multiple users according to an embodiment of this application.
FIG. 9A is an example diagram of generating a scrambling sequence by a scrambler for a non-EHT PPDU.
FIG. 9B is an example diagram of scrambling sequence generation by a scrambler for a EHT PPDU.
FIG. 10 is a schematic flowchart of a wireless communication method according to an embodiment of this application.
FIG. 11 is an example diagram of a wireless communication method according to Embodiment 1.
FIG. 12 is an example diagram of a wireless communication method according to Embodiment 2.
FIG. 13 is an example diagram of a wireless communication method according to Embodiment 3.
FIG. 14 is an example diagram of a wireless communication method according to Embodiment 4.
FIG. 15 is a schematic structural diagram of a communications device according to an embodiment of this application.
FIG. 16 is a schematic structural diagram of another communications device according to an embodiment of this application.
FIG. 17 is a schematic structural diagram of a communication apparatus according to an embodiment of this application.

### DESCRIPTION OF EMBODIMENTS

Technical solutions in this application are described below with reference to the accompanying drawings.

### Communications system

The technical solutions in the embodiments of this application may be applied to various communications systems, for example, a wireless local area networks (wireless local area networks, WLAN), a wireless fidelity (wireless fidelity, WiFi) system, or another communications system.

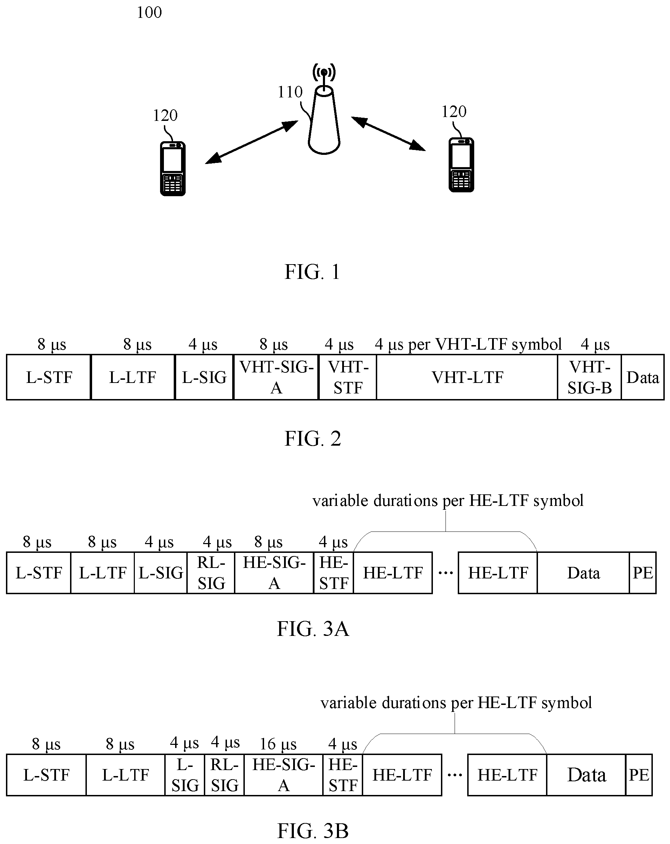

FIG. 1 shows a wireless communications system 100 to which embodiments of this application are applied. The wireless communications system 100 may include an access point (access point, AP) 110 and a station (station, STA) 120 that accesses a network by using the access point 110.

In some scenarios, an AP is referred to as an AP STA, that is, in a sense, the AP is also a STA.

In some scenarios, a STA is referred to as a non-AP STA (non-AP STA).

Communication in the communications system 100 may be communication between an AP and a STA, or may be communication between a STA and a STA, or communication between a STA and a peer station (peer STA). The peer station may refer to a peer device that communicates with the STA, for example, the peer station may be an AP, or may be a STA.

The AP is equivalent to a bridge that connects a wired network and a wireless network. It mainly connects the wireless network clients together and then connects the wireless network to the Ethernet. An AP device may be a terminal device (such as a mobile phone (mobile phone)) or a network device (such as a router) with a WiFi chip.

It should be understood that a role of a STA in a communications system is not fixed. For example, in some scenarios, when a mobile phone is connected to a route, the mobile phone is a STA, and when the mobile phone serves as a hotspot for another mobile phone, the mobile phone serves as an AP.

The AP and the STA may be devices in the Internet of Vehicles, Internet of Things nodes or sensors in an internet of things (internet of things, IoT), intelligent cameras, intelligent remote controls or intelligent water meter in a smart home, or sensors in a smart city.

In some embodiments, both the STA and the AP may support the 802.11be standard. The STA or the AP may also support multiple current and future WLAN standards of the 802.11 family, such as 802.11ax, 802.11ac, 802.11n, 802.11g, 802.11b, and 802.11a.

One or more links exist between the station and the access point. In some embodiments, the station and the access point support multi-band communication. For example, communication is simultaneously performed on 2.4 GHz, 5 GHz, 6GHz, 45GHz, and 60GHz bands, or communication is simultaneously performed on different channels of a same frequency band (or different frequency bands), thereby improving a communication throughput and/or reliability between devices. This device is generally referred to as a multi-band device, or is referred to as a multi-link device (multi-link device, MLD), and is sometimes also referred to as a multi-link entity or a multi-band entity. The multi-link device may be an access point device, or may be a station device. If the multi-link device is an access point device, the multi-link device includes one or more APs. If the multilink device is a station device, the multilink device includes one or more non-AP STA.

A multilink device that includes one or more APs may be referred to as an access point multi-link device (access point multi-link device, AP MLD), and a multilink device that includes one or more non-AP STA may be referred to as a non-AP multi-link device (non-ap multi-link device, Non-AP MLD).

In this embodiment of this application, the AP may include multiple APs, and the Non-AP may include multiple STAs. Multiple links may be formed between the AP in the AP and the STA in the Non-AP, and data communication may be performed between the AP in the AP and a corresponding STA in the Non-AP by using a corresponding link.

In this embodiment of this application, the STA may be a device supporting the WLAN/WiFi technology, such as a mobile phone a Pad (Pad), a notebook computer, a laptop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in a self driving (self driving), a wireless terminal in a remote medical surgery (remote medical surgery), a wireless terminal in a smart grid (smart grid), a wireless terminal in a transportation safety (transportation safety), a wireless terminal in a smart city (smart city), a wireless terminal in a smart home (smart home), or the like.

The WLAN technology may support a frequency band, which may include but is not limited to a low frequency band (for example, 2.4 GHz, 5 GHz, and 6GHz) and a high frequency band (for example, a 60GHz).

FIG. 1 exemplarily shows one AP and two STAs. Optionally, the communications system 100 may include multiple APs and another quantity of STAs. This is not limited in this embodiment of this application.

It should be understood that, in this embodiment of this application, a device that has a communications function in a network/system may be referred to as a communications device. The communications system 100 shown in FIG. 1 is used as an example. The communications device may include an access point 110 and a station 120 that have a communications function. The access point 110 and the station 120 may be specific devices described above. Details are not described herein again. The communications device may further include another device in the communications system 100, such as a network controller and a gateway, which is not limited in this embodiment of this application.

The AP and the STA may be deployed on land, including indoor or outdoor, handheld, or in-vehicle. May also be deployed on a water surface. It can also be deployed on airborne aircraft, balloons and satellites. A scenario in which the AP and the STA are located is not limited in this embodiment of this application.

It should be understood that all or some of functions of the communications device in this application may alternatively be implemented by software functions running on hardware, or by virtualization functions instantiated on a platform (for example, a cloud platform).

### Downlink PPDU

The following describes PPDU that may be used in a downlink (downlink, DL) transmission process.

### VHT PPDU

FIG. 2 is an example diagram of a format of a VHT PPDU. The VHT PPDU may include a legacy short training field (legacy short training field, L-STF), a legacy long training field (legacy long training field, L-LTF), a legacy signal (legacy signal, L-SIG), a very high throughput signal A (VHT signal A, VHT-SIG-A) field, a very high throughput short training field (VHT short training field, VHT-STF), a very high throughput long training field (VHT long training field, VHT-LTF), a very high throughput signal B (VHT signal B, VHT-SIG-B) field, and a data (data) field. A quantity of VHT-LTF symbols in the VHT-LTF field is variable. Each VHT-LTF symbol is 4 µs (4 µs per VHT-LTF symbol). If a value of a group identifier (Group ID) subfield in the VHT-SIG-A field is 0 or 63, it indicates that PPDU is VHT SU PPDU. If the value of the group identifier subfield in the VHT-SIG-A field is not 0 or 63, it indicates that PPDU is VHT MU PPDU.

### HE PPDU

FIG. 3A is an example diagram of a format of a HE SU PPDU. The HE SU PPDU may be used for single-user signal transmission. The HE SU PPDU may include a L-STF field, a L-LTF field, a L-SIG field, a repeated L-SIG (repeaed L-SIG, RL-SIG) field, a HE-SIG-A field, a HE-STF field, a data field, and a packet extension field (packet extension field, PE) field. A quantity of HE-LTF symbols of the HE-LTF field is variable, and duration of each HE-LTF symbol is variable (variable durations per HE-LTF symbol).

It should be noted that the HE-SIG-A field in the HE SU PPDU is not repeated.

FIG. 3B is an example diagram of a format of a HE ER SU PPDU. The HE ER SU PPDU may be used for single-user signal transmission. The HE ER SU PPDU may include a L-STF field, a L-LTF field, a L-SIG field, a RL-SIG field, a HE-SIG-A field, a HE-STF field, a HE-LTF field, and a PE field. A quantity of HE-LTF symbols in the HE-LTF field is variable, and duration of each HE-LTF symbol is variable.

It should be noted that duration of the HE-SIG-A field in the HE ER SU PPDU is twice that of another HE PPDU.

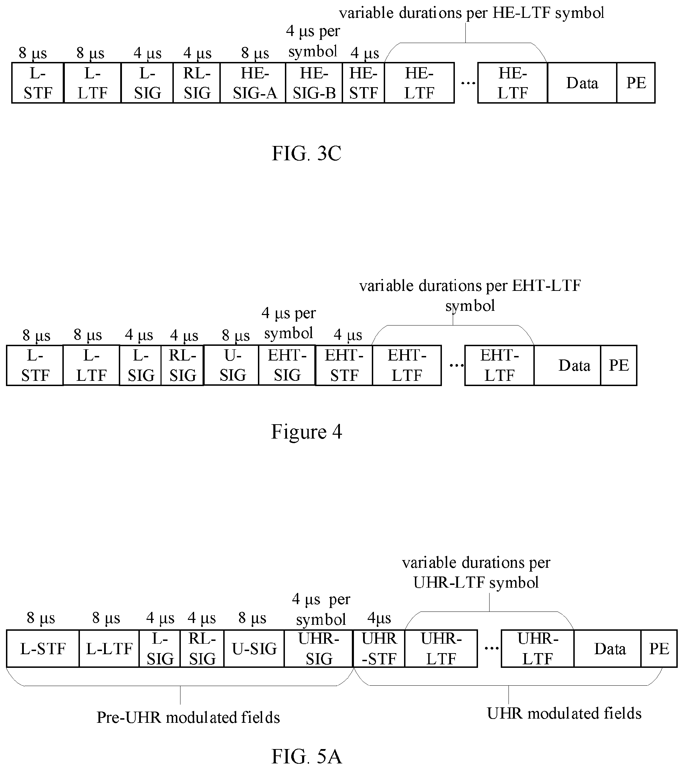

FIG. 3C is an example diagram of a format of a HE MU PPDU. If a HE MU PPDU is not a response to a trigger frame (trigger frame), the HE MU PPDU is configured to transmit a signal to one or more STAs.

The HE MU PPDU may include a L-STF field, a L-LTF field, a L-SIG field, a RL-SIG field, a HE-SIG-A field, a HE-SIG-B field, a HE-STF field, a HE-LTF field, and a PE field.

In a HE MU PPDU, the L-STF, L-LTF, L-SIG, RL-SIG, HE-SIG-A, and HE-SIG-B fields may all be referred to as pre-HE modulated fields. The HE-LTF, data, and PE fields may be referred to as HE modulated fields.

Each symbol in the HE-SIG-B field in the HE MU PPDU is 4µs (4µs per symbol). The quantity of HE-LTF symbols in the HE-LTF field is variable, and the duration of each HE-LTF symbol is variable.

### EHT MU PPDU

FIG. 4 is an example diagram of a format of a EHT MU PPDU. If the EHT MU PPDU is not a response to a trigger frame, the EHT MU PPDU is configured to transmit a signal to one or more STAs.

The EHT MU PPDU may include a L-STF field, a L-LTF field, a L-SIG field, a RL-SIG field, a U-SIG field, an EHT-SIG field, an EHT-STF field, an EHT-LTF field, a data field, and a PE field.

In a EHT MU PPDU, the L-STF, L-LTF, L-SIG, RL-SIG, U-SIG, and EHT-SIG fields may all be referred to as pre-EHT modulated fields. The EHT-STF, EHT-LTF, data, and PE fields may all be referred to as EHT modulated fields.

### UHR PPDU

The UHR PPDU may include two formats: UHR MU PPDU and UHR TB PPDU. If a UHR PPDU is not a response to a trigger frame, the format of the UHR PPDU may be UHR MU PPDU. If a UHR PPDU is a response of a trigger frame, the format of the UHR PPDU may be UHR TB PPDU. That is, the UHR TB PPDU format may be used for transmission in response to a trigger frame from the AP.

The UHR MU PPDU format may be used to transmit signals to one or more users. FIG. 5A is an example diagram of a UHR MU PPDU format. As shown in FIG. 5A, the UHR MU PPDU may include a L-STF field, a L-LTF field, a L-SIG field, a RL-SIG field, a U-SIG field, a UHR-SIG field, a UHR-STF field, a UHR-LTF field, a data field, and a PE field.

As shown in FIG. 5A, in a UHR MU PPDU, the L-STF, L-LTF, L-SIG, RL-SIG, U-SIG, and UHR-SIG may be referred to as pre-UHR modulated fields (pre-UHR modulated fields). The UHR-STF, UHR-LTF, data, and PE fields may be referred to as UHR modulated fields (UHR modulated fields).

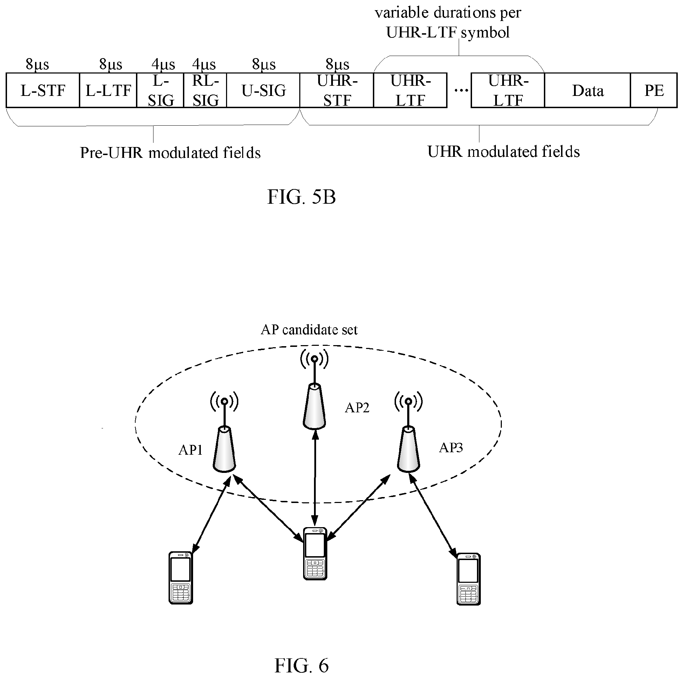

FIG. 5B is an example diagram of a UHR TB PPDU format. As shown in FIG. 5B, the UHR TB PPDU may include a L-STF field, a L-LTF field, a L-SIG field, a RL-SIG field, a U-SIG field, a UHR-STF field, a UHR-LTF field, data, and a PE field.

As shown in FIG. 5B, in a UHR TB PPDU, the L-STF, L-LTF, L-SIG, RL-SIG, and U-SIG fields may be referred to as pre-UHR modulated fields. The UHR-STF, UHR-LTF, data, and PE fields are referred to as UHR modulated fields.

Duration of the UHR-STF field in the UHR TB PPDU may be twice as long as duration of the UHR-STF field in the UHR MU PPDU. For the UHR PPDU, each UHR-LTF symbol and each data symbol may have the same GI duration. For example, GI duration may be 0.8µs, 1.6µs, or 3.2µs, respectively. The UHR-LTF symbol included in the UHR-LTF field may include three types: a 1x UHR-LTF symbol, a 2x UHR-LTF symbol, and a 4x UHR-LTF symbol. The duration for each 1x UHR-LTF symbol, 2x UHR-LTF symbol, and 4x UHR-LTF symbol without a GI may be 3.2µs, 6.4µs, and 12.8µs, respectively. A data symbol without a GI may be 12.8µs.

It should be understood that the foregoing PPDU format or type is only an example. The technical solutions provided in this application may be further applied to PPDU in another format or type.

### Multi-AP (multi-AP) collaboration

With development of technologies, some communications standards (for example, IEEE 802.11 UHR (Wi-Fi 8)) propose technical solutions for multi-AP collaboration. Multi-AP collaboration may allow multiple APs to share transmission resources to improve transmission resource utilization.

The following describes some terms of the multi-AP collaboration technology.

An AP candidate set (AP candidate set) may be a set of APs that can initiate or participate in multi-AP collaboration.

A sharing AP (sharing AP) may be an AP that obtains a TXOP and initiates multi-AP collaboration. At least one AP in an AP candidate set can become a sharing AP.

A shared AP (shared AP) may participate in multi-AP collaboration initiated by a sharing AP in a same AP candidate set.

The multi-AP collaboration may include a multi-AP collaboration preparation phase and a multi-AP collaboration transmission phase. The following separately describes the following.

In the multi-AP collaboration preparation phase, the sharing AP obtains the TXOP and initiates multi-AP collaboration. The sharing AP may send a first frame to one or more APs in a same AP candidate set to inquire about intention of each AP to participate in multi-AP collaboration. One or more APs will respond with a second frame to notify the sharing AP whether they intend to participate in the multi-AP collaboration. If an AP intentionally participates in the multi-AP collaboration, the AP becomes a shared AP in the multi-AP collaboration.

In a multi-AP coordinated transmission phase, a sharing AP and one or more shared APs may participate in multi-AP coordinated transmission. Alternatively, the sharing AP may not participate in multi-AP coordinated transmission. Two or more shared APs may participate in multi-AP coordinated transmission.

FIG. 6 is an example diagram of an AP candidate set. The AP candidate set shown in FIG. 6 includes three APs: AP1, AP2, and AP3. For example, the AP1 may function as a sharing AP to acquire the TXOP and initiate multi-AP collaboration. The AP2 and the AP3 may function as shared APs to participate in the multi-AP collaboration. AP1, AP2, and AP3 may participate in the multi-AP collaboration in the TXOP. For another example, AP2 may function as a sharing AP to obtain a TXOP and initiate multi-AP collaboration. AP1 and AP3 may function as shared Aps to participate in the multi-AP collaboration. In the TXOP, AP1 and AP3 may participate in the multi-AP coordinated transmission, but AP2 may not participate in the multi-AP coordinated transmission.

The mode of multi-AP transmission may include multi-AP joint transmission (joint transmission), coordinated (coordinated) orthogonal frequency division multiple access (OFDMA), and the like. The following uses the multi-AP joint transmission as an example to describe multi-AP transmission.

### Multi-AP joint transmission

Multi-AP joint transmission (referred to as joint transmission for short) means that at least two APs simultaneously send data to a target user (i.e., a target STA). Data sent by multiple APs occupies exactly a same frequency domain resource (coordination bandwidth), and is distinguished by different spatial streams. For a target STA that receives data, joint transmission is transparent. That is, the target STA cannot distinguish whether received data is jointly transmitted by multiple APs. Before joint transmission, data to a same target STA may be transmitted between APs by using a backhaul link (backhaul link). A backhaul message may be transmitted between APs by using a wired connection or a wireless connection.

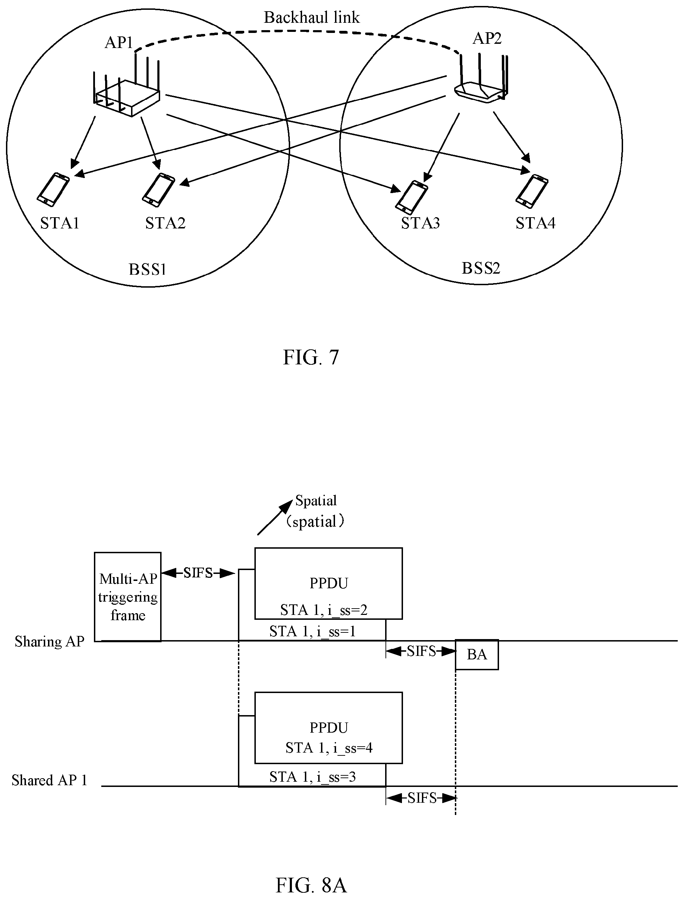

As shown in FIG. 7, AP1 and AP2 may implement multi-AP joint transmission. The AP1 and the AP2 may simultaneously send data to one or more of the STA1, the STA2, the STA3, and the STA4. The STA1 and the STA2 may belong to a basic service set (basic service set, BSS) 1. STA3 and STA4 may belong to BSS2. Data to a same STA may be transmitted between the AP1 and the AP2 by using a backhaul link.

Compared with a single AP, multi-AP joint transmission can increase the number of antennas, thereby increasing the total number of spatial streams. In addition, multi-AP joint transmission may serve multiple STAs at the same time, thereby improving a system throughput. In addition, multi-AP joint transmission may enable the target STA to receive channels from multiple locations, thereby improving transmission reliability.

When multi-AP joint transmission is performed, the sharing AP first sends a multi-AP trigger frame (multi-AP trigger frame). The multi-AP trigger frame may indicate one or more of the following information: a bandwidth, a quantity of HE/EHT/UHR-LTF symbols, an LDPC extra symbol segment (LDPC extra symbol segment), a pre-FEC fill factor, a PE disambiguity (PE Disambiguity), RU allocation, an FEC coding type, a modulation and coding scheme (modulation and coding scheme, MCS), and spatial flow allocation. In addition, the triggered shared AP may further perform phase offset estimation and time synchronization by using the multi-AP trigger frame. Multiple shared APs (or one or more shared APs and the sharing APs) that participate in multi-AP joint transmission may prepare and transmit a DL PPDU according to an indication of the multi-AP trigger frame.

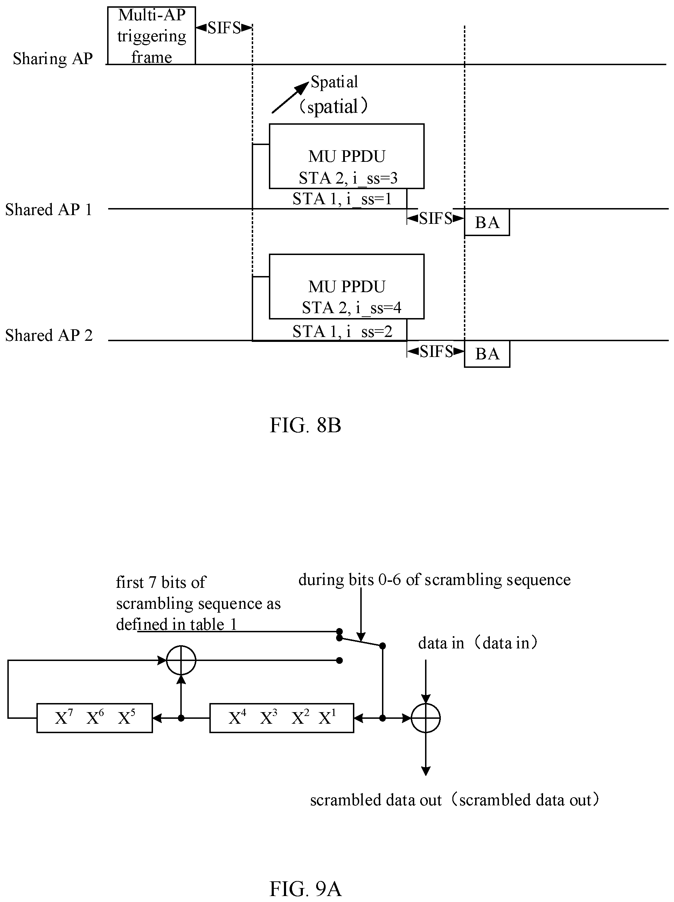

The following describes in detail a multi-AP joint transmission process according to an embodiment of this application with reference to FIG. 8A and FIG. 8B.

FIG. 8A is an example diagram of a process of multi-AP joint transmission to a single user according to an embodiment of this application. In the embodiment shown in FIG. 8A, the STA1 is associated with a shared AP (STA 1 associated with sharing AP). The sharing AP, the shared AP1, and the STA1 participate in multi-AP joint transmission.

In FIG. 8A, first, a sharing AP sends a multi-AP trigger frame. The shared AP1 waits for a short interframe space (short interframe space, SIFS) time after receiving the multi-AP trigger frame and the sharing AP waits for the SIFS time after sending the multi-AP trigger frame, to simultaneously transmit the respective PPDUs. The PPDU transmitted by the sharing AP or the shared AP1 may be a VHT SU PPDU, HE SU PPDU, EHT MU PPDU, or UHR MU PPDU (in a case of a single user, the EHT and the UHR may also use a MU PPDU format). The sharing AP and the shared AP each send at least one spatial stream to the target STA. As shown in FIG. 8A, data to the STA1 is transmitted by the sharing AP by using the spatial streams i_ss=1 and i_ss=2, and transmitted by the shared AP 1 by using the spatial streams i_ss=3 and i_ss=4. After receiving the data correctly, the STA1 may return a block Ack (block Ack, BA) to the associated sharing AP.

FIG. 8B is an example diagram of a process of multi-AP joint transmission to multiple users according to an embodiment of this application. In the embodiment shown in Figure 8B, STA1 is associated with shared AP1 (STA 1 associated with shared AP1). STA2 is associated with the shared AP2 (STA 2 associated with shared AP2). The shared AP1, the STA1, the shared AP2, and the STA2 participate in multi-AP joint transmission.

First, the sharing AP sends a multi-AP trigger frame. After waiting for the SIFS time after receiving the multi-AP trigger frame, the shared AP1 and the shared AP2 simultaneously transmit the respective MU PPDUs. The MU PPDU sent by the shared AP 1 or the shared AP 2 may be a VHT MU PPDU, HE MU PPDU, EHT MU PPDU, UHR MU PPDU, or the like. As shown in FIG. 8B, data to the STA1 is transmitted by the shared AP1 and the shared AP2 by using the spatial streams i_ss=1 and i_ss=2, respectively. Data to the STA2 is transmitted by the shared AP1 and the shared AP2 by using the spatial streams i_ss=3 and i_ss=4, respectively. After receiving the respective data correctly, the STA1 and the STA2 each return a BA to the respective associated shared APs. That is, the STA1 returns a BA to the shared AP1, and the STA2 returns a BA message to the shared AP2.

### Scrambler

In a data interaction process, data needs to be scrambled. The transmit end may scramble the transmit data by using a scrambler. The receive end may descramble (or descramble) the received data by using a scrambler that is the same as the transmit end. One of the main parameters of a scrambler is a scrambler initial value (or referred to as a scrambling initial value).

For different types of PPDU, the communications system may provide different scramblers. The following uses non-EHT (non-EHT) PPDU and EHT PPDU as examples for description.

### Scrambling for non-EHT PPDU

Non-EHT PPDU may include non-HT PPDU, HT PPDU, VHT PPDU, HE PPDU, and the like. A data field of the PPDU may include one or more of a SERVICE (SERVICE), a PHY service data unit (PHY service data unit, PSDU), a tail (tail), and a pad part. For a data field of the non-EHT PPDU, scrambling may be performed by using a PPDU synchronization scrambler whose length is 127 bits. A byte of the PSDU may be placed in a transmitted serial bit stream, bit 0 is at a head (first) position of the transmitted serial bit stream, and bit 7 is at an end (last) position of the transmitted serial bit stream.

FIG. 9A is an example diagram of generating scrambled data (scrambled data) by a scrambler for a non-EHT PPDU. During bits 0-6 of a scrambling sequence (during bits 0-6 of scrambling sequence), the first seven bits (that is, a scrambling initial value) of the scrambling sequence may be defined as in Table 1 (first 7 bits of scrambling sequence as defined in table 1).

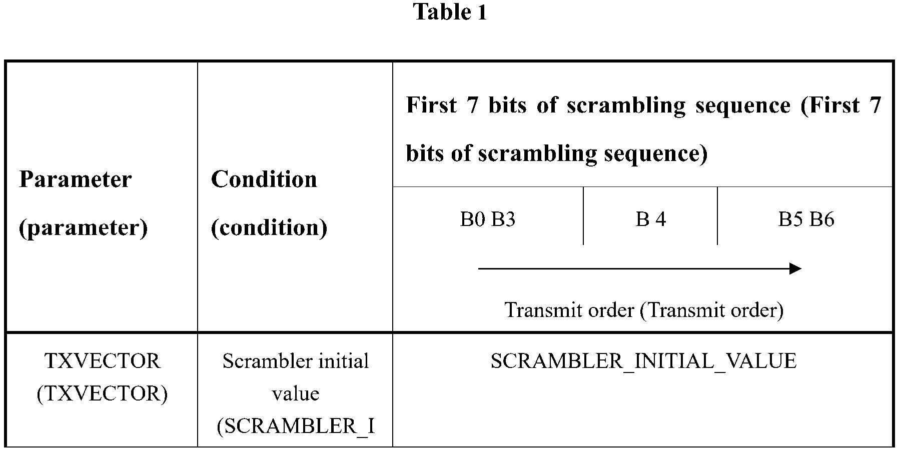

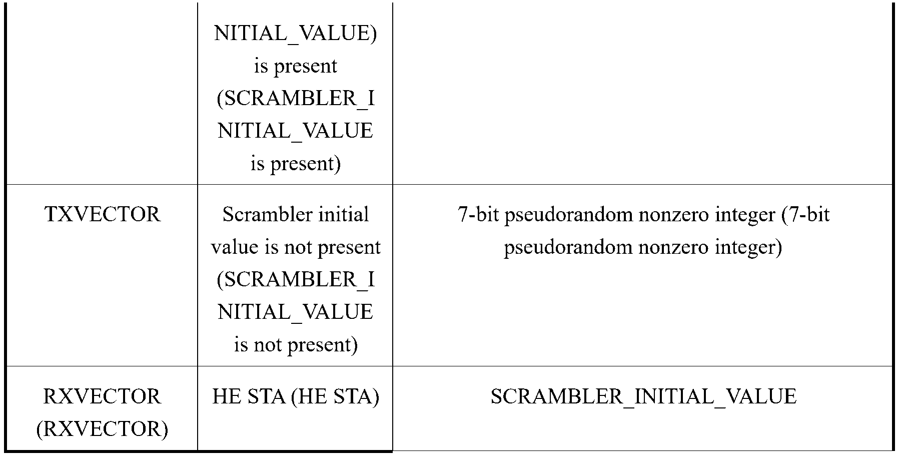

As shown in Table 1, during transmission, if a TXVECTOR parameter SCRAMBLER_INITIAL_VALUE transmitted by a medium access control (medium access control, MAC) sublayer to a physical (PHY) layer presents, the first 7 bits of the scrambling sequence are SCRAMBLER_INITIAL_VALUE; and if the TXVECTOR parameter SCRAMBLER_INITIAL_VALUE transmitted by the MAC sublayer to the PHY layer does not present, the first 7 bits of the scrambling sequence are a 7-bit pseudorandom nonzero integer.

It should be noted that Table 1 is only an example. For example, some of the content in Table 1 may be separately implemented. That is, Table 1 may be split and used. Alternatively, the first seven bits of the scrambling sequence may be other content not shown in Table 1.

During reception, before descrambling, the HE STA generates the RXVECTOR parameter SCRAMBLER_INITIAL_VALUE according to the first seven bits of the SERVICE (SERVICE) field. In addition, a non-HE STA does not generate the RXVECTOR parameter SCRAMBLER_INITIAL _VALUE.

The SCRAMBLER_INITIAL_VALUE may present in a PPDU that carries a multi user request to send (multi user request to send, MU-RTS) trigger frame (trigger frame), and in a PPDU that carries a clear to send (clear to send, CTS) frame (in response to the MU-RTS trigger frame).

### Scrambling for EHT PPDU

The data field of the EHT PPDU may be composed of a service, a PSDU, a tail (if a BCC code is used), and a pre-FEC pad bit added by the PHY. For a data field of the EHT PPDU, a PPDU synchronization scrambler with a length of 2047 bits may be used for scrambling. A byte of the PSDU is placed in a transmitted serial bit stream, bit 0 is at a head (first) position of the transmitted serial bit stream, and bit 7 is at an end (last) position of the transmitted serial bit stream.

In transmission, the first 11 bits of the scrambling sequence (that is, the scrambling initial value) must be set to a pseudo-random non-zero state. These 11 bits are also used to set the scrambler state of the subsequent scrambling bits. In reception by the EHT STA, the initial state may be estimated from 11 least significant bits (least significant bit, LSB) of the scrambled service field.

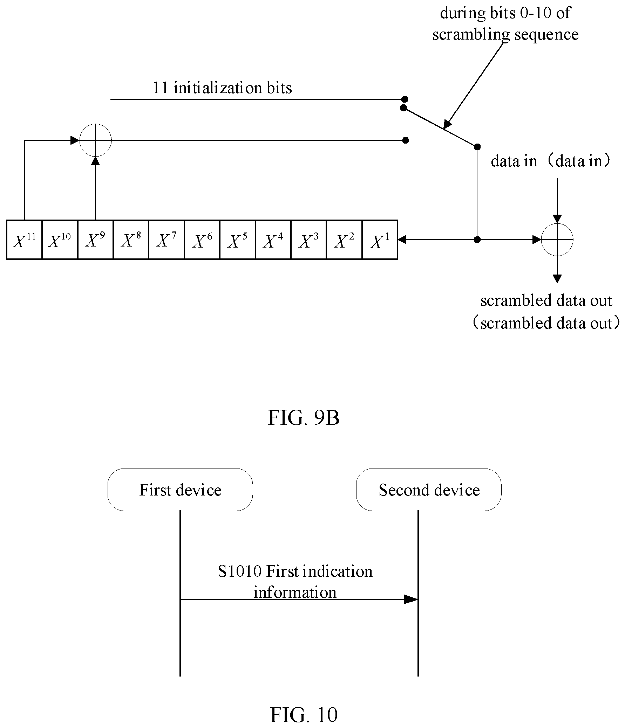

FIG. 9B is an example diagram of scrambling data generated by a scrambler for a EHT PPDU. As shown in FIG. 9B, during bit 0-10 of scrambling sequence (during bits 0-10 of scrambling sequence), the first 11 bits (that is, a scrambling initial value) of the scrambling sequence are 11 initialization bits (11 initialization bits).

When the MU-RTS frame is transmitted by using the EHT PPDU, seven initialization bits (equivalent to seven LSBs of the scrambled service field) shown in FIG. 9B cannot be all set to zero. These seven LSBs are used to initialize the scrambler of the non-HT PPDU in response to the MU-RTS.

In a multi-AP collaboration scenario, a data transmission process has some problems. For example, when performing multi-AP joint transmission, the target STA receives spatial streams from different APs. The STA may obtain the data of the target STA by performing steps such as stream parsing, decoding, and descrambling. It can be learned from the foregoing that multi-AP joint transmission is transparent to the STA. Therefore, if the APs have a difference in a coding parameter for data to a same target STA, data parsing of the target STA is abnormal. For example, if APs that participate in multi-AP joint transmission use different scrambling sequences for a same target STA, the descrambling of data by the target STA is abnormal.

FIG. 10 is a schematic flowchart of a wireless communication method according to an embodiment of this application. The method shown in FIG. 10 may be executed by a first device and a second device.

The second device may belong to a first AP candidate set. Some or all APs in the first AP candidate set may send data to one or more target users by means of multi-AP joint transmission. The multiple APs that participate in the multi access point AP joint transmission may include the second device. That is, the second device may send data to the target user by means of multi-AP joint transmission.

The first device may also belong to the first AP candidate set. That is, the first device may also be an AP in the first AP candidate set. In the first AP candidate set, the first device may be a sharing AP or a shared AP. The second device may be a sharing AP or a shared AP. For example, the first device may be a sharing AP, and the second device may be a shared AP. For another example, the first device may be a shared AP, and the second device may be a sharing AP. For another example, both the first device and the second device may be shared APs.

The target user may include, for example, a target STA. The target user may be a STA associated with the first device, or the target user may be a STA associated with the second device, or the target user may be a STA associated with another AP that participates in the multi-AP joint transmission.

It should be noted that multi-AP joint transmission may be for a single user or for a multi-user. In a case in which the multi-AP joint transmission is for multiple users, the target user may be any one of the multiple users.

The method shown in FIG. 10 may include step S1010.

Step S1010: The first device sends the first indication information to the second device.

The first indication information may be used to indicate a scrambling initial value of a first PPDU sent by the multi-AP joint transmission. For example, the first indication information may indicate a TXVECTOR parameter SCRAMBLER_INITIAL_VALUE of the first PPDU for the target user.

In a case of multi-AP joint transmission, one or more APs (including the second device) that receive the first indication information may set a same scrambling initial value for a same target user according to the first indication information, so that scrambling initial values of PPDUs sent to a same target user are the same, and further, the target user can correctly decode the PPDUs.

The first PPDU may belong to multiple PPDUs jointly transmitted by multiple APs. For example, the first PPDU may be a PPDU prepared or sent by the second device in a multi-AP joint transmission process.

It should be noted that the first PPDU can only be transmitted on a non-punctured channel indicated by a multi-AP trigger frame. That is, downlink PPDUs sent by APs that participate in multi-AP joint transmission can only be transmitted on non-punctured channels indicated by a multi-AP trigger frame.

In some embodiments, types of multiple PPDUs that are jointly transmitted by multiple APs may be preset. For example, types of multiple PPDUs jointly transmitted by multiple APs may be set to be the same. For example, the multiple PPDUs may be all of a first type. That is, a type of the first PPDU is the first type. The first type may be, for example, UHR MU PPDU.

It should be understood that, in a case in which types of multiple PPDUs that are jointly transmitted by multiple APs are the same, a type of a target user in this example of this application is limited. For example, in a case in which the first type is UHR MU PPDU, this embodiment of this application can only be applicable to a UHR STA. On the other hand, because multiple PPDUs that are jointly transmitted by multiple APs are all UHR MU PPDU, an implementation process of multi-AP joint transmission is simpler. In addition, the multi-AP joint transmission may be implemented not only as SU transmission, but also as MU transmission.

In some embodiments, the types of multiple PPDU s jointly transmitted by multiple APs may be indicated during communication. For example, the type of the first PPDU may be indicated by using second indication information. The second device may determine the type of the first PPDU according to the second indication information. In other words, each AP that participates in multi-AP joint transmission may determine a type of a downlink PPDU according to the second indication information. For example, the second indication information may indicate that a type of the first PPDU is VHT PPDU, HE PPDU, EHT MU PPDU, UHR MU PPDU, or the like.

It should be understood that, if types of multiple PPDUs jointly transmitted by multiple APs can be configured, multi-AP joint transmission can support more types of target users.

For example, the second indication information may be indicated by a multi-AP trigger frame triggering the first PPDU. That is, the multi-AP trigger frame may indicate a type of downlink PPDUs sent by all APs that participate in the multi-AP joint transmission.

It should be noted that the multi-AP trigger frame in this application may be carried in any type of PPDU. For example, the PPDU that carries the multi-AP trigger frame may include: a Non-HT PPDU, a non-HT duplicated PPDU, a HT PPDU, a VHT PPDU, a HE PPSU, an EHT PPDU, or a UHR PPDU.

Optionally, the second indication information may be carried in a first field. That is, the first field may be used to indicate a PPDU type of multi-AP joint transmission. Therefore, in some embodiments, the first field may also be referred to as a multi-AP joint transmission PPDU type field. Optionally, the first field may be located in a common info (common info) field or a special user info (special user info) field of a multi-AP trigger frame.

Optionally, the first field may be M bits. M may be a positive integer. For example, M may be 2. In a case in which M is 2, a value of the first field is 0, which may represent VHT PPDU. A value of 1 may represent HE PPDU. A value of 2 may represent EHT MU PPDU, and a value of 3 may represent UHR MU PPDU.

It should be noted that the first field may be a newly added field. Alternatively, an existing field may be set to the first field. For example, a reserved field may be set to the first field.

This application proposes two solutions (solution 1 and solution 2) to indicate first indication information. The following separately describes the following.

### Solution 1

In solution 1, the first indication information is carried in a second PPDU. For example, the first indication information may be determined by using a scrambling initial value of the second PPDU.

In some embodiments, the second PPDU may carry a multi-AP trigger frame that triggers the first PPDU. That is, the multi-AP trigger frame PPDU that triggers the first PPDU may be used to determine a scrambling initial value of the first PPDU.

It should be understood that the multi-AP trigger frame is sent by the sharing AP. Therefore, if the first indication information is carried by the second PPDU that carries the multi-AP trigger frame that triggers the first PPDU, the scrambling initial value of the first PPDU can be indicated only by the sharing AP.

In some embodiments, the second PPDU may be in an SU transmission format. In a case in which the second PPDU is in the SU transmission format, a quantity of scrambling initial values of the second PPDU is only one. Therefore, the scrambling initial value of the first PPDU may be determined according to this one scrambling initial value of the second PPDU.

For example, in a case in which the second PPDU is an EHT MU PPDU or a UHR MU PPDU, the second PPDU may be only in the SU transmission format. That is, the multi-AP trigger frame can be transmitted only in the SU transmission format of the EHT MU PPDU or the UHR MU PPDU, so as to ensure that a quantity of scrambling initial values of the second PPDU is only one.

For example, if the multi-AP trigger frame sent by the sharing AP is carried in the EHT MU PPDU, the sharing AP may set the TXVECTOR parameter EHT_PPDU_TYPE to a first value, so as to indicate EHT SU transmission. The first value may be, for example, 1 or 0.

For another example, if the multi-AP trigger frame sent by the sharing AP is carried in the UHR MU PPDU, the sharing AP may set the TXVECTOR parameter EHT_PPDU_TYPE to a second value, so as to indicate UHR SU transmission. The second value may be, for example, 1 or 0.

In some embodiments, the second PPDU may be in a MU transmission format. In a case in which the second PPDU is in a MU transmission format, a quantity of scrambling initial values of the second PPDU may be multiple. The scrambling initial value of the first PPDU may be determined according to one target scrambling initial value of the multiple scrambling initial values of the second PPDU. The target scrambling initial value may meet one or more of the following: specified in the protocol, preconfigured, preset, or configured.

The quantity of bits of the scrambling initial value of the second PPDU may be a first bit quantity. The quantity of bits of the scrambling initial value of the first PPDU may be a second bit quantity. In some embodiments, the first bit quantity may be greater than or equal to the second bit quantity.

For example, a type of the second PPDU may be EHT MU PPDU or UHR MU PPDU. As described above, a scrambling initial value of EHT MU PPDU or UHR MU PPDU is 11 bits. Bit quantities of scrambling initial values of all other types of PPDU are less than or equal to 11 bits (for example, 7 bits or 11 bits). Therefore, if the type of the second PPDU is EHT MU PPDU or UHR MU PPDU, it can be ensured that the first bit quantity is greater than or equal to the second bit quantity.

Optionally, in a case in which the first bit quantity is equal to the second bit quantity, the scrambling initial value of the first PPDU may be equal to the scrambling initial value of the second PPDU. That is, the TXVECTOR parameter SCRAMBLER_INITIAL_VALUE of the first PPDU for the target user (for example, each non-AP STA participating in multi-AP joint transmission) may be set to the same value as the RXVECTOR parameter SCRAMBLER_INITIAL_VALUE of the second PPDU. For example, if the type of the first PPDU is the same as the type of the second PPDU, the first bit quantity is equal to the second bit quantity, and the scrambling initial value of the first PPDU may be equal to the scrambling initial value of the second PPDU. For example, when both the type of the first PPDU and the type of the second PPDU are EHT MU PPDU, both the first bit quantity and the second bit quantity are 11, and the scrambling initial value of the first PPDU may be equal to the scrambling initial value of the second PPDU. Alternatively, the type of the first PPDU may be different from the type of the second PPDU, but the first bit quantity may be equal to the second bit quantity. For example, in a case in which the type of the first PPDU is EHT MU PPDU and the type of the second PPDU is UHR MU PPDU, both the first bit quantity and the second bit quantity are 11, and a scrambling initial value of the first PPDU may be equal to a scrambling initial value of the second PPDU.

Optionally, in a case in which the first bit quantity is greater than the second bit quantity, the scrambling initial value of the first PPDU is a value corresponding to the first N bits of the scrambling initialization value of the second PPDU. N is equal to the second bit quantity. N may be, for example, equal to 7. That is, the TXVECTOR parameter SCRAMBLER_INITIAL_VALUE of the first PPDU for the target user (for example, each non-AP STA that participates in multi-AP joint transmission) may be set to a value corresponding to the first N bits (N LSBs) of the RXVECTOR parameter SCRAMBLER_INITIAL_VALUE of the second PPDU. For example, in a case in which the type of the first PPDU is VHT PPDU or HE PPDU, and the type of the second PPDU is EHT MU PPDU or UHR MU PPDU, the scrambling initial value of the first PPDU may be the first seven scrambling initialization bits of the second PPDU.

It should be noted that in a case in which the scrambling initial value of the first PPDU is a value corresponding to the first N scrambling initialization bits of the second PPDU, the first N scrambling initialization bits of the scrambling initial value of the second PPDU cannot be all set to 0. For example, the first N scrambling initialization bits of the scrambling initial value of the second PPDU may be set to a pseudo-random non-zero state. This setting can avoid the case that the scrambling initial value of the first PPDU is 0, so as to avoid a scrambling abnormality of the first PPDU.

In some embodiments, the first bit quantity may be less than the second bit quantity.

Optionally, in a case in which the first bit quantity is less than the second bit quantity, a value corresponding to the first M scrambling initialization bits of the scrambling initial value of the first PPDU is a scrambling initial value of the second PPDU. M is equal to the first bit quantity. For example, M may be equal to 7. That is, the first M bits of the TXVECTOR parameter SCRAMBLER_INITIAL_VALUE of the first PPDU for the target user may be set to the RXVECTOR parameter SCRAMBLER_INITIAL_VALUE of the second PPDU. A value corresponding to the remaining bits of the scrambling initial value of the first PPDU may be a first integer. The first integer may be one or more of the following: specified by a protocol, preconfigured, preset, or configured. The first integer may be, for example, 1111 (in binary).

For example, if the second PPDU is non-HT (duplicated) PPDU, HT PPDU, VHT SU PPDU, HE SU PPDU, or HE ER SU PPDU, and the first PPDU is UHR MU PPDU, the first seven bits (seven LSBs) of the TXVECTOR parameter SCRAMBLER_INITIAL_VALUE for each non-AP STA in the first PPDU may be set to the RXVECTOR parameter SCRAMBLER_INITIAL_VALUE of the second PPDU, and the remaining four bits may be set to the first integer.

The following describes solution 1 in detail by using Embodiment 1 and Embodiment 2.

### Embodiment 1

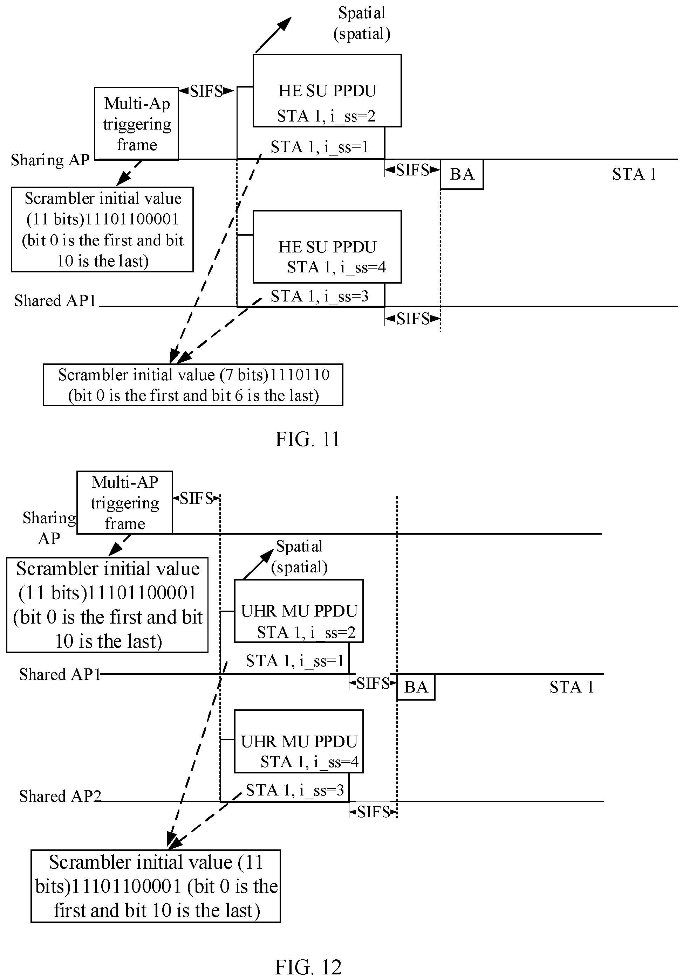

FIG. 11 is an example diagram of a wireless communication method according to Embodiment 1. The sharing AP and the shared AP1 form a multi-AP collaboration set. The first device may be the sharing AP in FIG. 11. The second device may be the shared AP1 in FIG. 11. The STA1 is associated with the sharing AP. STA1 may be a target user. The sharing AP and the shared AP1 perform multi-AP joint transmission to the STA1.

First, the sharing AP sends the EHT MU PPDU (that is, the second PPDU) that carries the multi-AP trigger frame. The scrambling initial value of EHT MU PPDU is 11101100001 (B0 is the first and B10 is the last). In addition, the multi-AP trigger frame indicates that the DL PPDU type of the multi-AP joint transmission is HE SU PPDU. The multi-AP trigger frame further indicates that the spatial streams i_ss=2 and i_ss= 3 are allocated to the shared AP1. After receiving the multi-AP trigger frame, the shared AP1 prepares one or more HE SU PPDUs (including the first PPDU), and sets the HE TXVECTOR parameter SCRAMBLER_INITIAL_VALUE to the first seven bits of the RXVECTOR parameter SCRAMBLER_INITIAL_VALUE of the PPDU that carries the multi-AP trigger frame, that is, 1110110. After the SIFS interval, the sharing AP and the shared AP 1 simultaneously send HE SU PPDUs to the STA1. The STA1 receives the HE SU PPDUs correctly and returns a BA to the associated sharing AP after the SIFS.

### Embodiment 2

FIG. 12 is an example diagram of a wireless communication method according to Embodiment 2. The sharing AP, the shared AP1, and the shared AP2 form a multi-AP collaboration set. The first device may be the sharing AP in FIG. 12. The second device may be the shared AP1 or the shared AP2 in FIG. 12. The STA1 is associated with the shared AP1. The STA1 may be a target user. The shared AP1 and the shared AP2 perform multi-AP joint transmission to the STA1. The PPDU sent by the multi-AP joint transmission can only be UHR MU PPDU.

First, the sharing AP sends the EHT MU PPDU (that is, the second PPDU) that carries the multi-AP trigger frame. The initial value of EHT MU PPDU scrambling is 11101100001 (B0 is the first and B10 is the last). In addition, the multi-AP trigger frame indicates that spatial streams i_ss=1 and i_ss= 2 are allocated to the shared AP1, and the spatial streams i_ss=3 and i_ss= 4 are allocated to the shared AP2. Each of the shared AP1 and the shared AP2 prepares one or more UHR MU PPDUs (including the first PPDU) after receiving the multi-AP trigger frame. The shared AP1 and the shared AP2 further set the UHR TXVECTOR parameter SCRAMBLER_INITIAL_VALUE for the STA1 to the RXVECTOR parameter SCRAMBLER_INITIAL_VALUE of the PPDU that carries the multi-AP trigger frame, that is, 11101100001 (B0 is the first and B10 is the last). After the SIFS interval, the shared AP1 and the shared AP2 send the UHR MU PPDUs to the STA1. The STA 1 receives the UHR MU PPDUs correctly and returns a BA to the associated shared AP1 after the SIFS.

### Solution 2

In solution 2, the first indication information may be carried in a backhaul message between the first device and the second device. For example, before multi-AP joint transmission is performed, a first indication information may be exchanged between multiple APs in a same AP candidate set by means of backhaul transmission.

The first indication information may indicate that the scrambling initial value of the first PPDU is a pseudo-random non-zero integer.

For example, if the first PPDU is VHT PPDU or HE PPDU, the TXVECTOR parameter SCRAMBLER_INITIAL_VALUE of the target user identified by the TXVECTOR parameter STA_ID may be determined by multi-AP coordinating backhaul transmission. The scrambler initial value of the target user may be a 7-bit pseudo-random non-zero integer, and is used to initialize the initial scrambling value of the PPDU synchronization scrambler of the target user.

For another example, if the first PPDU is EHT MU PPDU or UHR MU PPDU, the TXVECTOR parameter SCRAMBLER_INITIAL_VALUE of the target user identified by the TXVECTOR parameter STA_ID may be determined by multi-AP coordinating backhaul transmission. The scrambler initial value of the target user may be an 11-bit pseudo-random non-zero integer, and is used to initialize the initial scrambling value of the PPDU synchronization scrambler of the target user.

In some embodiments, the first indication information may include one or more scrambling initial values. The scrambling initial value of the first PPDU may be one of the one or more scrambling initial values. Optionally, by means of backhaul transmission, the APs may exchange a scrambler initial value of each target STA. During multi-user joint transmission, each AP uses, for each target STA, a scrambler initial value of the target STA indicated by a backhaul message. Different target STAs may have different scrambling initial values.

In some embodiments, the first indication information may include identification information of the target user and a scrambling initial value corresponding to the target user, and the scrambling initial value of the first PPDU may be determined according to the scrambling initial value corresponding to the target user.

For example, the first indication information may include identification information (STA ID) of the target user and a scrambler initial value (scrambler initial value) corresponding to the target user, as shown in Table 2.

**Table 2**

| **STA ID** | **Scrambler initial value** |
|---|---|
| *n* | Scrambler initial value for STA *n* (scrambler initial value for STA *n) n*∈ [1,2007] |

For another example, the first indication information may include identification information (STA ID) of target users and scrambler initial values (scrambler initial value) corresponding to the target users, as shown in Table 3.

**Table 3**

| **STA VID** | **Scrambler initial value** |
|---|---|
| 1 | Scrambler initial value for STA 1 (scrambler initial value for STA 1) |
| 2 | Scrambler initial value for STA 2 (scrambler initial value for STA 2) |
| ... ... | ... ... |
| *n* | Scrambler initial value for STA n (scrambler initial value for STA *n*) *n*∈ [1,2007] |

In some embodiments, the backhaul message (backhaul message) may further include one or more of the following information: first identification information of the target user; a BBS color of a BBS associated with the target user; a PSDU of the target user; second identification information of one or more target users of the multi-AP joint transmission; a VBSS color of a VBSS formed by multiple APs and a user associated with the multiple APs; or a PSDU of one or more target users. The first identification information may be a STA ID of the target STA. The second identification information may be a STA VID of one or more target users that are targeted by the multi-AP joint transmission.

For example, if the multi-AP joint transmission is to a single user, the following parameters are exchanged in the multi-AP joint transmission backhaul: a STA ID of the target STA, a BSS color of the BSS associated with the target STA, and a PSDU of the target STA.

For another example, if the multi-AP joint transmission is to multiple uses, the following parameters are exchanged in the multi-AP joint transmission backhaul: a STA VID of each target STA, a VBSS color of a VBSS formed by the multi-AP, and a PSDU of each target STA.

The following describes solution 2 in detail by using Embodiment 3 and Embodiment 4.

### Embodiment 3

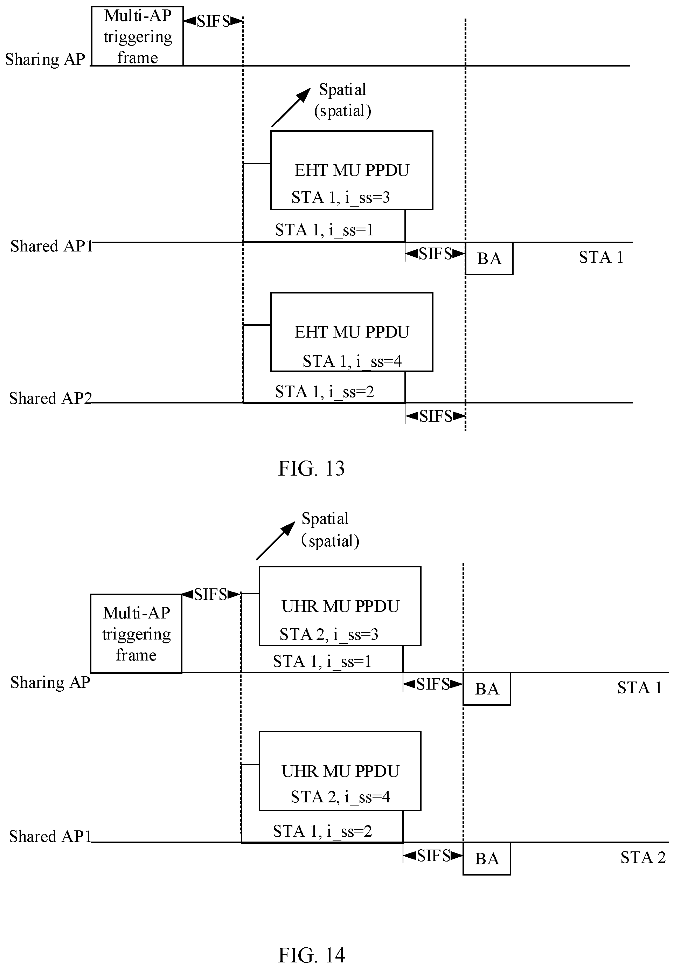

FIG. 13 is an example diagram of a wireless communication method according to Embodiment 3. The sharing AP, the shared AP1, and the shared AP2 form a multi-AP collaboration set. The first device may be the sharing AP, shared AP 1, or shared AP2 in FIG. 13. The second device may be a shared AP1 or a shared AP2 different from the first device in FIG. 13. The STA1 is associated with the shared AP1. The STA1 may be a target user. The shared AP1 and the shared AP2 perform multi-AP joint transmission to the STA1.

First, the sharing AP sends a multi-AP trigger frame. The multi-AP trigger frame may indicate that a DL PPDU type of multi-AP joint transmission is EHT MU PPDU. In addition, the multi-AP trigger frame may indicate that the spatial streams i_ss=1 and i_ss= 3 are allocated to the shared AP 1, and the spatial streams i_ss=2 and i_ss= 4 are allocated to the shared AP 2. After receiving the multi-AP trigger frame, the shared AP1 and the shared AP2 prepare the EHT MU PPDUs, and set the EHT TXVECTOR parameter SCRAMBLER_INITIAL_VALUE to a scrambling initial value transmitted in multi-AP coordinating backhaul transmission. For example, a scrambling initial value of STA1 in the backhaul message is 10110011011 (B0 is the first and B10 is the last). After the SIFS interval, the shared AP1 and the shared AP2 simultaneously send one or more EHT MU PPDUs to the STA1. After the STA1 receives the EHT MU PPDUs correctly, the STA1 returns a BA message to the associated shared AP1 after the SIFS.

### Embodiment 4

FIG. 14 is an example diagram of a wireless communication method according to Embodiment 4. The first device may be the sharing AP or the shared AP1 in FIG. 14. The second device may be the shared AP1 or the sharing AP that is different from the first device in FIG. 14. The STA1 is associated with the sharing AP. The STA2 is associated with the shared AP1. STA1 or STA2 may be a target user. The sharing AP and the shared AP2 perform multi-AP joint transmission to the STA1 and the STA2. The PPDU of multi-AP joint transmission can only be UHR MU PPDU.

First, the sharing AP sends a multi-AP trigger frame. The spatial streams i_ss=2 and i_ss= 4 are allocated to the shared AP1 by using the multi-AP trigger frame. After receiving the multi-AP trigger frame, the shared AP1 prepares the UHR MU PPDU, and sets the VHT TXVECTOR parameter SCRAMBLER _INITIAL_VALUE for the STA1 and the STA2 to an initial scrambling value that is transferred in multi-AP coordinating backhaul transmission. For example, the scrambling initial values of the PPDU sent to the STA1 and the STA2 are respectively 10110011100 and 11010010101 (both are the case that B0 is the first and B10 is the last). After the SIFS interval, the sharing AP and the shared AP 1 simultaneously send one or more UHR MU PPDUs to the STA1 and the STA 2. The STA1 and the STA2 correctly receive the corresponding UHR MU PPDUs, and return BAs to the respectively associated sharing AP and shared AP1 after the SIFS.

The TXVECTOR and the RXVECTOR are interfaces provided by the PHY for the MAC.

In this application, when a PPDU in a format of VHT, HE, or EHT is used for a UHR device, a TXVECTOR parameter SCRAMBLER_INITIAL_VALUE is added. For the UHR PPDU, the TXVECTOR and RXVECTOR parameters SCRAMBLER_INITIAL_VALUE are added. The following separately describes different cases.

Case 1: The second device is a UHR device, and the first PPDU is of a VHT type. In case 1, a value of the TXVECTOR parameter SCRAMBLER_INITIAL_VALUE may be a first value. In case 1, a value of the RXVECTOR parameter SCRAMBLER_INITIAL_VALUE may be a first value. The first value may be, for example, the first seven bits of the scrambling sequence (the first seven bits in the service field prior to descrambling), and the first bit of the scrambling sequence is an LSB of the SCRAMBLER_INITIAL_VALUE (The first 7 bits of the scrambling sequence (the first 7 bits in the SERVICE field prior to descrambling), with the first bit of the scrambling sequence being the LSB of SCRAMBLER_INITIAL_VALUE).

Based on the technical solution in case 1, based on a related technology, in this application, VHT TXVECTOR and RXVECTOR parameters are added as shown in bold fonts in Table 4.

**Table 4**

| Parameters | Condition (Condition) | Value (Value) | TXVECTOR | RXVECTOR |
|---|---|---|---|---|
| SCRAM BLER_I NITIAL _VALU E | **FORMAT is VHT, GROUP_ID is either 0 or 63 (VHT SU PPDU), and STA is a UHR STA (FORMAT is VHT, GROUP_ID is either 0 or 63 (VHT SU PPDU), and STA is a UHR STA).** | **The first 7 bits of the scrambling sequence (the first 7 bits in the SERVICE field prior to descrambling), with the first bit of the scrambling sequence being the LSB of SCRAMBLER_INITIAL_VALUE. (The first 7 bits of the scrambling sequence (the first 7 bits in the SERVICE field prior to descrambling), with the first bit of the scrambling sequence being the LSB of SCRAMBLER_INITIAL_VALUE)** | **Y** | **Y** |
| | FORMAT is VHT, GROUP_ID is either 0 or 63(VHT SU PPDU), and STA is a **non-UHR** HE STA (FORMAT is VHT, GROUP_ID is either 0 or 63(VHT SU PPDU), and STA is a **non-UHR** HE STA). | The first 7 bits of the scrambling sequence (the first 7 bits in the SERVICE field prior to descrambling), with the first bit of the scrambling sequence being the LSB of SCRAMBLER_INITIAL_VALUE. (The first 7 bits of the scrambling sequence (the first 7 bits in the SERVICE field prior to descrambling), with the first bit of the scrambling sequence being the LSB of SCRAMBLER_INITIAL_VALUE.) | N | Y |
| | FORMAT is VHT and GROUP_ID is either 0 nor 63(VHT MU PPDU)( FORMAT is VHT and GROUP_ID is either 0 | Not **present** (Not present) | N | N |
| | nor 63(VHT MU PPDU)) | | | |
| | FORMAT is VHT and STA is not a HE STA (FORMAT is VHT and STA is not a HE STA). | Not present (Not present) | N | N |
| NOTE-In the "TXVECTOR" and "RXVECTOR" columns, the following apply:Y = Present; N = Not present; O = Optional. (NOTE-In the "TXVECTOR" and "RXVECTOR" columns, the following apply: Y = Present; N = Not present; O = Optional.) | | | | |

It should be noted that, the value of the TXVECTOR parameter GROUP_ID being 0 or 63 represents VHT SU PPDU, otherwise represents VHT MU PPDU_{∘}

Case 2: The second device is a UHR device, and the first PPDU is of an HE type. In case 2, a value of the TXVECTOR parameter SCRAMBLER_INITIAL_VALUE may be a second value. In case 2, a value of the RXVECTOR parameter SCRAMBLER_INITIAL_VALUE may be a second value. The second value may be, for example, the first seven bits of the scrambling sequence (the first seven bits of the service field prior to descrambling), and the first bit of the scrambling sequence is an LSB of the SCRAMBLER_INITIAL_VALUE (The first 7 bits of the scrambling sequence (the first 7 bits in the SERVICE field prior to descrambling), with the first bit of the scrambling sequence being the LSB of SCRAMBLER_INITIAL_VALUE.).

Based on the technical solution in case 2, based on a related technology, in this application, TXVECTOR and RXVECTOR parameters are added as shown in bold fonts in Table 5.

**Table 5**

| **Parameters** | **Condition (Condition)** | **Value (Value)** | **TXVECTOR** | **RXVECTOR** |
|---|---|---|---|---|
| SCRAM BLER_I NITIAL _VALU E | **FORMAT is HE_SU, the STA is a UHR (FORMAT is HE_SU, the STA is a UHR STA).** | **The first 7 bits of the scrambling sequence (the first 7 bits in the SERVICE field prior to descrambling), with the first bit of the scrambling sequence being the LSB of SCRAMBLER_INITIAL_VALUE. ( The first 7 bits of the scrambling sequence (the first 7 bits in the SERVICE field prior to descrambling), with the first bit of the scrambling sequence being the LSB of SCRAMBLER_INITIAL _VALUE. )** | **Y** | **Y** |
| | FORMAT is HE_SU, **and the STA is a non-UHR HE STA**(FORMAT is HE_SU, **and the STA is a non-UHR HE STA**) | The first 7 bits of the scrambling sequence (the first 7 bits in the SERVICE field prior to descrambling), with the first bit of the scrambling sequence being the LSB of SCRAMBLER _INITIAL _VALUE. (The first 7 bits of the scrambling sequence (the first 7 bits in the SERVICE field prior to descrambling), with the first bit of the scrambling sequence being the LSB of SCRAMBLER _INITIAL_VALUE.) | N | Y |
| | The format is HE_ER_SU (FORMAT is HE_ER_SU). | The first 7 bits of the scrambling sequence (the first 7 bits in the SERVICE field prior to descrambling), with the first bit of the scrambling sequence being the LSB of SCRAMBLER _INITIAL _VALUE. (The first 7 bits of the scrambling sequence (the first 7 bits in the SERVICE field prior to descrambling), with the first bit of the scrambling sequence being the LSB of SCRAMBLER_INITIAL_VALUE.) | N | Y |
| | FORMAT is HE_MU or HE_TB. ( FORMAT is HE_MU or HE_TB.) | Not present (Not present) | N | N |
| NOTE-In the "TXVECTOR" and "RXVECTOR" columns, the following apply:Y = Present; N = Not present; O = Optional. (NOTE-In the "TXVECTOR" and "RXVECTOR" columns, the following apply: Y = Present; N = Not present; O = Optional.) | | | | |

Case 3: The second device is a UHR device, and the first PPDU is of an EHT type.

In case 3, a value of the TXVECTOR parameter SCRAMBLER_INITIAL_VALUE may be a third value. In case 3, a value of the RXVECTOR parameter SCRAMBLER_INITIAL_VALUE may be a third value. The third value may be, for example, the first 7 bits of the scrambling sequence (the first 7 bits in the SERVICE field prior to descrambling), with the first bit of the scrambling sequence being the LSB of SCRAMBLER_INITIAL_VALUE (The first 7 bits of the scrambling sequence (the first 7 bits in the SERVICE field prior to descrambling), with the first bit of the scrambling sequence being the LSB of SCRAMBLER_INITIAL_VALUE.).

Based on the technical solution in case 3, based on a related technology, in this application, TXVECTOR and RXVECTOR parameters are added as shown in bold fonts in Table 6.

**Table 6**

| **Parameters** | **Condition (Condition)** | **Value (Value)** | **TXVECTOR** | **RXVECTOR** |
|---|---|---|---|---|
| SCRAM BLER_I NITIAL _VALU E | **FORMAT is EHT_MU, and the STA is a UHR STA (FORMAT is EHT_MU, and the STA is a UHR STA).** | **The first 11 bits of the scrambling sequence (the first 11 bits in the Scrambler Initialization field prior to descrambling), with the first bit of the scrambling sequence being the LSB of SCRAMBLER_INITIAL _VALUE. (The first 11 bits of the scrambling sequence (the first 11 bits in the** | **Y** | **Y** |
| | | **Scrambler Initialization field prior to descrambling), with the first bit of the scrambling sequence being the LSB of SCRAMBLER_INITIAL_VALUE.)** | | |
| | FORMAT is EHT_MU, and **the STA is a non-UHR EHT STA** (FORMAT is EHT_MU, and **the STA is a non-UHR EHT STA**). | The first 11 bits of the scrambling sequence (the first 11 bits in the Scrambler Initialization field prior to descrambling), with the first bit of the scrambling sequence being the LSB of SCRAMBLER _INITIAL _VALUE. (The first 11 bits of the scrambling sequence (the first 11 bits in the Scrambler Initialization field prior to descrambling), with the first bit of the scrambling sequence being the LSB of SCRAMBLER_INITIAL_VALUE.) | N | Y |
| | FORMAT is UHR_TB PHY _VER_UNKNOWN (FORMAT is UHR_TB or PHY_VER_UNKNOWN). | Not present (Not present) | | |
| NOTE-In the "TXVECTOR" and "RXVECTOR" columns, the following apply:Y = Present; N = Not present; O = Optional. (NOTE-In the "TXVECTOR" and "RXVECTOR" columns, the following apply: Y = Present; N = Not present; O = Optional.) | | | | |

Case 4: The second device is a UHR device, and the first PPDU is of a UHR type. In case 4, a value of the TXVECTOR parameter SCRAMBLER_INITIAL_VALUE may be a fourth value. In case 4, a value of the RXVECTOR parameter SCRAMBLER_INITIAL_VALUE may be a fifth value. The fourth value and the fifth value may be the same. For example, the fourth value or the fifth value may be the first 7 bits of the scrambling sequence (the first 7 bits in the SERVICE field prior to descrambling), with the first bit of the scrambling sequence being the LSB of SCRAMBLER_INITIAL _VALUE (the first 7 bits of the scrambling sequence (the first 7 bits in the SERVICE field prior to descrambling), with the first bit of the scrambling sequence being the LSB of SCRAMBLER_INITIAL_VALUE.).

Based on the technical solution for case 4, this application provides the TXVECTOR and the RXVECTOR parameters as shown in Table 7.

**Table 7**

| **Parameters** | **Condition (Condition)** | **Value (Value)** | **TXVECTOR** | **RXVECTOR** |
|---|---|---|---|---|
| SCRAM BLER_I NITIAL _VALU E | FORMAT is UHR_MU (FORMAT is UHR_MU). | The first 11 bits of the scrambling sequence (the first 11 bits in the Scrambler Initialization field prior to descrambling), with the first bit of the scrambling sequence being the LSB of SCRAMBLER _INITIAL _VALUE. (The first 11 bits of the scrambling sequence (the first 11 bits in the Scrambler Initialization field prior to descrambling), with the first bit of the scrambling sequence being the LSB of SCRAMBLER _INITIAL_VALUE.) | Y | Y |
| | FORMAT is UHR_TB PHY _VER_UNKNOWN (FORMAT is UHR_TB or PHY_VER_UNKNOWN). | Not present (Not present) | | |
| N NOTE-In the "TXVECTOR" and "RXVECTOR" columns, the following apply:Y = Present; N = Not present; O = Optional. (NOTE-In the "TXVECTOR" and "RXVECTOR" columns, the following apply: Y = Present; N = Not present; O = Optional.) | | | | |

The foregoing describes the method embodiments of this application in detail, and the following describes the apparatus embodiments of this application in detail. It should be understood that the descriptions of the method embodiments correspond to descriptions of the apparatus embodiments, and therefore, for parts that are not described in detail, reference may be made to the foregoing method embodiments.

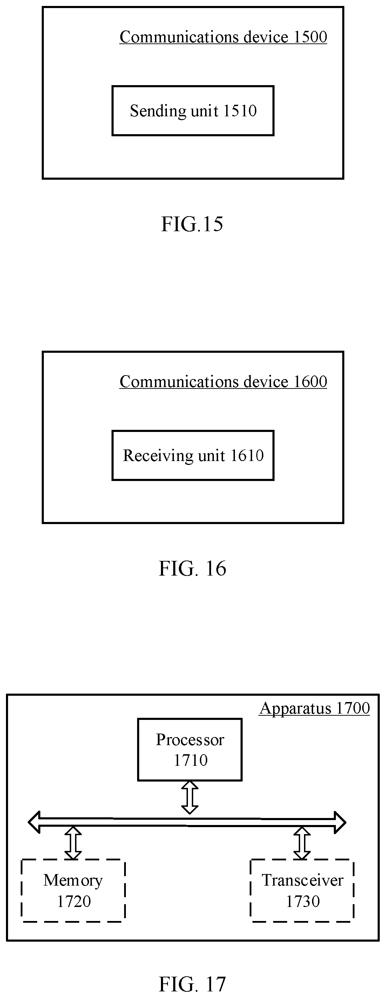

FIG. 15 is a schematic structural diagram of a communications device 1500 according to an embodiment of this application. The communications device 1500 is a first device. The communications device 1500 includes a sending unit 1510.

The sending unit 1510 is configured to send first indication information to a second device. the second device sends data to a target user by means of multi-AP joint transmission. The first indication information is used to indicate a scrambling initial value of a first physical layer protocol data unit PPDU sent by the multi-AP joint transmission.

In some embodiments, a type of the first PPDU is indicated by second indication information.

In some embodiments, the second indication information is indicated by a multi-AP trigger frame triggering the first PPDU.

In some embodiments, the second indication information is carried in a first field, and the first field is located in a common information field or a special user information field.

In some embodiments, types of multiple PPDUs sent by the multi-AP joint transmission are all a first type.

In some embodiments, the first type is ultra-high-reliability multi-user physical layer protocol data unit UHR MU PPDU.

In some embodiments, the first indication information is carried in a second PPDU, and the first indication information is determined by using a scrambling initial value of the second PPDU.

In some embodiments, the second PPDU carries a multi-AP trigger frame that triggers the first PPDU.

In some embodiments, the second PPDU is in an SU transmission format.

In some embodiments, a quantity of bits of the scrambling initial value of the second PPDU is a first bit quantity, a quantity of bits of the scrambling initial value of the first PPDU is a second bit quantity, and the first bit quantity is greater than or equal to the second bit quantity.

In some embodiments, the type of the second PPDU is EHT MU PPDU or UHR MU PPDU.

In some embodiments, when the first bit quantity is greater than the second bit quantity, the scrambling initial value of the first PPDU is a value corresponding to the first N scrambling initialization bits of the second PPDU scrambling initial value, and N is equal to the second bit quantity.

In some embodiments, the first N scrambling initialization bits of the second PPDU scrambling initial value are set to a pseudo-random non-zero state.

In some embodiments, a quantity of bits of the scrambling initial value of the second PPDU is a first bit quantity, and a quantity of bits of the scrambling initial value of the first PPDU is a second bit quantity. In a case in which the quantity of the first bits is less than the second bit quantity, a value corresponding to the first M scrambling initialization bits of the scrambling initial value of the first PPDU is a scrambling initial value of the second PPDU, a value corresponding to remaining bits of the scrambling initial value of the first PPDU is a first integer, and M is equal to the first bit quantity.

In some embodiments, the first indication information is carried in a backhaul message between the first device and the second device.

In some embodiments, the first indication information includes identification information of the target user and a scrambling initial value corresponding to the target user, and the scrambling initial value of the first PPDU is determined according to the scrambling initial value corresponding to the target user.

In some embodiments, the backhaul message further includes one or more of the following information: first identification information of the target user. a BBS color of a BBS associated with the target user; a PSDU of the target user; second identification information of one or more target users of the multi-AP joint transmission; a VBSS color of a VBSS formed by the multiple APs and a user associated with the multiple APs; or a PSDU of the one or more target users.

In some embodiments, when the second device is an ultra-high reliability UHR device, and the first PPDU is of a very high-throughput VHT type, a value of the TXVECTOR parameter SCRAMBLER_INITIAL_VALUE is a first value.

In some embodiments, when the second device is a UHR device, and the first PPDU is of a high-efficiency HE type, a value of a TXVECTOR parameter SCRAMBLER_INITIAL _VALUE is a second value.

In some embodiments, when the second device is a UHR device, and the first PPDU is a EHT type, a value of a TXVECTOR parameter SCRAMBLER_INITIAL _VALUE is a third value.

In some embodiments, when the second device is an UHR device, and the first PPDU is an UHR type, a value of the TXVECTOR parameter SCRAMBLER_INITIAL_VALUE is a fourth value, and a value of the receive vector RXVECTOR parameter SCRAMBLER_INITIAL_VALUE is a fifth value.

In an optional embodiment, the sending unit 1510 may be a transceiver 1730. The communications device 1500 may further include a processor 1710 and a memory 1720, which are specifically shown in FIG. 17.

FIG. 16 is a schematic structural diagram of a communications device 1600 according to an embodiment of this application. The communications device 1600 is a second device. The communications device 1600 includes a receiving unit 1610.

The receiving unit 1610 is configured to receive first indication information sent by a first device. the he second device sends data to the target user by means of multi-AP joint transmission. The first indication information is used to indicate a scrambling initial value of the first PPDU sent by the multi-AP joint transmission.

In some embodiments, the type of the first PPDU is indicated by second indication information.

In some embodiments, the second indication information is indicated by a multi-AP trigger frame triggering the first PPDU.

In some embodiments, the second indication information is carried in a first field, and the first field is located in a common information field or a special user information field.

In some embodiments, types of multiple PPDUs sent by the multi-AP joint transmission are all a first type.

In some embodiments, the first type is UHR MU PPDU.

In some embodiments, the first indication information is carried in a second PPDU, and the first indication information is determined by using a scrambling initial value of the second PPDU.

In some embodiments, the second PPDU carries a multi-AP trigger frame that triggers the first PPDU.

In some embodiments, the second PPDU is in an SU transmission format.

In some embodiments, a quantity of bits of the scrambling initial value of the second PPDU is a first bit quantity, a quantity of bits of the scrambling initial value of the first PPDU is a second bit quantity, and the first bit quantity is greater than or equal to the second bit quantity.

In some embodiments, a type of the second PPDU is EHT MU PPDU or UHR MU PPDU.

In some embodiments, when the first bit quantity is greater than the second bit quantity, the scrambling initial value of the first PPDU is a value corresponding to the first N scrambling initialization bits of the second PPDU scrambling initial value, and N is equal to the second bit quantity.

In some embodiments, the first N scrambling initialization bits of the second PPDU scrambling initial value are set to a pseudo-random non-zero state.

In some embodiments, a quantity of bits of the scrambling initial value of the second PPDU is a first bit quantity, and a quantity of bits of the scrambling initial value of the first PPDU is a second bit quantity. In a case in which the quantity of the first bits is less than the second bit quantity, a value corresponding to the first M scrambling initialization bits of the scrambling initial value of the first PPDU is a scrambling initial value of the second PPDU, a value corresponding to remaining bits of the scrambling initial value of the first PPDU is a first integer, and M is equal to the first bit quantity.

In some embodiments, the first indication information is carried in a backhaul message between the first device and the second device.

In some embodiments, the first indication information includes identification information of the target user and a scrambling initial value corresponding to the target user, and the scrambling initial value of the first PPDU is determined according to the scrambling initial value corresponding to the target user.

In some embodiments, the backhaul message further includes one or more of the following information: first identification information of the target user. a BBS color of a BBS associated with the target user; a PSDU of the target user; second identification information of one or more target users of the multi-AP joint transmission; a VBSS color of a VBSS formed by the multiple APs and a user associated with the multiple APs; or a PSDU of the one or more target users.

In some embodiments, when the second device is a UHR device, and the first PPDU is of a VHT type, a value of the TXVECTOR parameter SCRAMBLER_INITIAL _VALUE is a first value.

In some embodiments, when the second device is a UHR device, and the first PPDU is of an HE type, a value of a TXVECTOR parameter SCRAMBLER_INITIAL _VALUE is a second value.

In some embodiments, when the second device is a UHR device, and the first PPDU is of a EHT type, a value of a TXVECTOR parameter SCRAMBLER_INITIAL_VALUE is a third value.

In some embodiments, when the second device is an UHR device, and the first PPDU is an UHR type, a value of the TXVECTOR parameter SCRAMBLER_INITIAL_VALUE is a fourth value, and a value of the RXVECTOR parameter SCRAMBLER_INITIAL_VALUE is a fifth value.

In an optional embodiment, the receiving unit 1610 may be a transceiver 1730. The communications device 1600 may further include a processor 1710 and a memory 1720, which are specifically shown in FIG. 17.

FIG. 17 is a schematic structural diagram of a communication apparatus according to an embodiment of this application. A dashed line in FIG. 17 indicates that the unit or module is optional. The apparatus 1700 may be configured to implement the method described in the foregoing method embodiments. The apparatus 1700 may be a chip, a terminal device, or a network device.

The apparatus 1700 may include one or more processors 1710. The processor 1710 may support the apparatus 1700 to implement the method described in the foregoing method embodiments. The processor 1710 may be a general-purpose processor or a dedicated processor. For example, the processor may be a central processing unit (central processing unit, CPU). Alternatively, the processor may be another general purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1700 may further include one or more memories 1720. The memory 1720 stores a program, and the program may be executed by the processor 1710, so that the processor 1710 executes the method described in the foregoing method embodiments. The memory 1720 may be independent of or integrated into the processor 1710.

The apparatus 1700 may further include a transceiver 1730. The processor 1710 may communicate with another device or chip by using the transceiver 1730. For example, the processor 1710 may perform data transceiver with another device or chip by using the transceiver 1730.

An embodiment of this application further provides a computer-readable storage medium, configured to store a program. The computer-readable storage medium may be applied to the terminal or the network device provided in embodiments of this application, and the program causes a computer to perform the methods performed by the terminal or the network device in various embodiments of this application.

An embodiment of this application further provides a computer program product. The computer program product includes a program. The computer program product may be applied to the terminal or the network device provided in embodiments of this application, and the program causes a computer to perform the methods performed by the terminal or the network device in various embodiments of this application.

An embodiment of this application further provides a computer program. The computer program may be applied to a terminal or a network device provided in embodiments of this application, and the computer program causes a computer to execute the methods to be executed by the terminal or the network device in embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and accompanying drawings of this application are used for distinguishing different objects from each other, rather than defining a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefined" or "preconfigured" may be implemented by prestoring corresponding code or a corresponding table in a device (for example, including a terminal device and a network device) or in other manners that can be used for indicating related information, and a specific implementation thereof is not limited in this application. For example, being pre-defined may refer to being defined in a protocol.

In embodiments of this application, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In this embodiment of this application, the term "include" may refer to direct including, or may refer to indirect including. Optionally, "include" mentioned in this embodiment of this application may be replaced with "indicate" or "used for determining". For example, "A includes B", which may be replaced with "A indicates B", or "A is used to determine B".

In embodiments of this application, sequence numbers of the foregoing processes do not mean execution sequences. The execution sequences of the processes should be determined according to functions and internal logic of the processes, and should not be construed as any limitation on the implementation processes of embodiments of this application.

In this embodiment of this application, the "protocol" may refer to a standard protocol in the communications field, for example, may include a WiFi protocol and a related protocol applied to a future WiFi communications system. This is not limited in this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may be or may not be physically separate, and parts displayed as units may be or may not be physical units, and may be at one location, or may be distributed on a plurality of network elements. Some or all of the units may be selected according to actual requirements to achieve the objective of the solutions of embodiments.

In addition, functional units in embodiments of this application may be integrated into one processing unit, or each of the units may exist alone physically, or two or more units may be integrated into one unit.

Some or all of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to embodiments of the present application are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (digital subscriber line, DSL)) manner or a wireless (such as infrared, radio, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state drive, SSD)), or the like.

The foregoing descriptions are merely specific implementations of this application, but the protection scope of this application is not limited thereto. Any variation or replacement readily figured out by persons skilled in the art within the technical scope disclosed in this application shall fall within the protection scope of this application. Therefore, the protection scope of this application shall be subject to the protection scope of the claims.

## Claims

1. A wireless communication method, comprising:
sending, by a first device, first indication information to a second device;
wherein the second device sends data to a target user by means of multi access point AP joint transmission, wherein the first indication information is used to indicate a scrambling initial value of a first physical layer protocol data unit PPDU sent by the multi-AP joint transmission.

2. The method according to claim 1, wherein a type of the first PPDU is indicated by second indication information.

3. The method according to claim 2, wherein the second indication information is indicated by a multi-AP trigger frame triggering the first PPDU.

4. The method according to claim 3, wherein the second indication information is carried in a first field, and the first field is located in a common information field or a special user information field.

5. The method according to claim 1, wherein types of multiple PPDUs sent by the multi-AP joint transmission are all a first type.

6. The method according to claim 5, wherein the first type is ultra-high-reliability multi-user physical layer protocol data unit UHR MU PPDU.

7. The method according to any one of claims 1 to 6, wherein the first indication information is carried in a second PPDU, and the first indication information is determined by using a scrambling initial value of the second PPDU.

8. The method according to claim 7, wherein the second PPDU carries a multi-AP trigger frame that triggers the first PPDU.

9. The method according to claim 7 or 8, wherein the second PPDU is in an SU transmission format.

10. The method according to claim 7 or 8, wherein a quantity of bits of the scrambling initial value of the second PPDU is a first bit quantity, a quantity of bits of the scrambling initial value of the first PPDU is a second bit quantity, and the first bit quantity is greater than or equal to the second bit quantity.

11. The method according to claim 10, wherein a type of the second PPDU is extremely high throughput multi-user physical layer protocol data unit EHT MU PPDU or UHR MU PPDU.

12. The method according to claim 10 or 11, wherein when the first bit quantity is greater than the second bit quantity, the scrambling initial value of the first PPDU is a value corresponding to the first N scrambling initialization bits of the second PPDU scrambling initial value, and N is equal to the second bit quantity.

13. The method according to claim 12, wherein the first N scrambling initialization bits of the second PPDU scrambling initial value are set to a pseudo random non-zero state.

14. The method according to claim 7 or 8, wherein a bit quantity of the scrambling initial value of the second PPDU is a first bit quantity, a bit quantity of the scrambling initial value of the first PPDU is a second bit quantity, in a case in which the first bit quantity is less than the second bit quantity, a value corresponding to the first M scrambling initialization bits of the scrambling initial value of the first PPDU is a scrambling initial value of the second PPDU, a value corresponding to remaining bits of the scrambling initial value of the first PPDU is a first integer, and M is equal to the first bit quantity.

15. The method according to any one of claims 1 to 6, wherein the first indication information is carried in a backhaul message between the first device and the second device.

16. The method according to claim 15, wherein the first indication information comprises identification information of the target user and a scrambling initial value corresponding to the target user, and the scrambling initial value of the first PPDU is determined according to the scrambling initial value corresponding to the target user.

17. The method according to claim 15 or 16, wherein the backhaul message further comprises one or more of the following information:
first identification information of the target user;
a BBS color of a basic service set BBS associated with the target user;
a physical layer service data unit PSDU of the target user;
second identification information of one or more target users of the multi-AP joint transmission;
a VBSS color of a virtual basic service set VBSS formed by the multiple APs and a user associated with the multiple APs; or
a PSDU of the one or more target users.

18. The method according to any one of claims 1 to 17, wherein when the second device is an ultra-high reliability UHR device, and the first PPDU is of a very high-throughput VHT type, a value of a transmit vector TXVECTOR parameter scrambler initial value SCRAMBLER_INITIAL _VALUE is a first value.

19. The method according to any one of claims 1 to 18, wherein when the second device is a UHR device, and the first PPDU is of a high-efficiency HE type, a value of a TXVECTOR parameter SCRAMBLER_INITIAL_VALUE is a second value.

20. The method according to any one of claims 1 to 19, wherein when the second device is a UHR device, and the first PPDU is of an extremely high throughput EHT type, a value of a TXVECTOR parameter SCRAMBLER_INITIAL_VALUE is a third value.

21. The method according to any one of claims 1 to 20, wherein when the second device is a UHR device, and the first PPDU is of a UHR type, a value of a TXVECTOR parameter SCRAMBLER_INITIAL_VALUE is a fourth value, and a value of a receive vector RXVECTOR parameter SCRAMBLER_INITIAL_VALUE is a fifth value.

22. A wireless communication method, comprising:
receiving, by a second device, first indication information sent by a first device;
wherein the second device sends data to a target user by means of multi access point AP joint transmission, wherein the first indication information is used to indicate a scrambling initial value of a first physical layer protocol data unit PPDU sent by the multi-AP joint transmission.

23. The method according to claim 22, wherein a type of the first PPDU is indicated by second indication information.

24. The method according to claim 23, wherein the second indication information is indicated by a multi-AP trigger frame triggering the first PPDU.

25. The method according to claim 24, wherein the second indication information is carried in a first field, and the first field is located in a common information field or a special user information field.

26. The method according to claim 22, wherein types of multiple PPDUs sent by the multi-AP joint transmission are all a first type.

27. The method according to claim 26, wherein the first type is ultra-high-reliability multi-user physical layer protocol data unit UHR MU PPDU.

28. The method according to any one of claims 22 to 27, wherein the first indication information is carried in a second PPDU, and the first indication information is determined by using a scrambling initial value of the second PPDU.

29. The method according to claim 28, wherein the second PPDU carries a multi-AP trigger frame that triggers the first PPDU.

30. The method according to claim 28 or 29, wherein the second PPDU is in an SU transmission format.

31. The method according to claim 28 or 29, wherein a quantity of bits of the scrambling initial value of the second PPDU is a first bit quantity, a quantity of bits of the scrambling initial value of the first PPDU is a second bit quantity, and the first bit quantity is greater than or equal to the second bit quantity.

32. The method according to claim 31, wherein a type of the second PPDU is extremely high throughput multi-user physical layer protocol data unit EHT MU PPDU or UHR MU PPDU.

33. The method according to claim 31 or 32, wherein when the first bit quantity is greater than the second bit quantity, the scrambling initial value of the first PPDU is a value corresponding to the first N scrambling initialization bits of the second PPDU scrambling initial value, and N is equal to the second bit quantity.

34. The method according to claim 33, wherein the first N scrambling initialization bits of the second PPDU scrambling initial value are set to a pseudo random non-zero state.

35. The method according to claim 28 or 29, wherein a bit quantity of the scrambling initial value of the second PPDU is a first bit quantity, a bit quantity of the scrambling initial value of the first PPDU is a second bit quantity, in a case in which the first bit quantity is less than the second bit quantity, a value corresponding to the first M scrambling initialization bits of the scrambling initial value of the first PPDU is a scrambling initial value of the second PPDU, a value corresponding to remaining bits of the scrambling initial value of the first PPDU is a first integer, and M is equal to the first bit quantity.

36. The method according to any one of claims 22 to 27, wherein the first indication information is carried in a backhaul message between the first device and the second device.

37. The method according to claim 36, wherein the first indication information comprises identification information of the target user and a scrambling initial value corresponding to the target user, and the scrambling initial value of the first PPDU is determined according to the scrambling initial value corresponding to the target user.

38. The method according to claim 36 or 37, wherein the backhaul message further comprises one or more of the following information:
first identification information of the target user;
a BBS color of a basic service set BBS associated with the target user;
a physical layer service data unit PSDU of the target user;
second identification information of one or more target users of the multi-AP joint transmission;
a VBSS color of a virtual basic service set VBSS formed by the multiple APs and a user associated with the multiple APs; or
a PSDU of the one or more target users.

39. The method according to any one of claims 22 to 38, wherein when the second device is an ultra-high reliability UHR device, and the first PPDU is of a very high-throughput VHT type, a value of the transmit vector TXVECTOR parameter scrambler initial value SCRAMBLER_INITIAL _VALUE is a first value.

40. The method according to any one of claims 22 to 39, wherein when the second device is a UHR device, and the first PPDU is of a high-efficiency HE type, a value of a TXVECTOR parameter SCRAMBLER_INITIAL_VALUE is a second value.

41. The method according to any one of claims 22 to 40, wherein when the second device is a UHR device, and the first PPDU is of an extremely high throughput EHT type, a value of a TXVECTOR parameter SCRAMBLER_INITIAL_VALUE is a third value.

42. The method according to any one of claims 22 to 41, wherein when the second device is a UHR device, and the first PPDU is of a UHR type, a value of a TXVECTOR parameter SCRAMBLER_INITIAL_VALUE is a fourth value, and a value of a receive vector RXVECTOR parameter SCRAMBLER_INITIAL_VALUE is a fifth value.

43. A communications device, wherein the communications device is a first device, and the communications device comprises:
a sending unit, configured to send first indication information to a second device;
wherein the second device sends data to a target user by means of multi access point AP joint transmission, wherein the first indication information is used to indicate a scrambling initial value of a first physical layer protocol data unit PPDU sent by the multi-AP joint transmission.

44. The communications device according to claim 43, wherein a type of the first PPDU is indicated by second indication information.

45. The communications device according to claim 44, wherein the second indication information is indicated by a multi-AP trigger frame triggering the first PPDU.

46. The communications device according to claim 45, wherein the second indication information is carried in a first field, and the first field is located in a common information field or a special user information field.

47. The communications device according to claim 43, wherein types of multiple PPDUs sent by the multi-AP joint transmission are all a first type.

48. The communications device according to claim 47, wherein the first type is ultra-high-reliability multi-user physical layer protocol data unit UHR MU PPDU.

49. The communications device according to any one of claims 43 to 48, wherein the first indication information is carried in a second PPDU, and the first indication information is determined by using a scrambling initial value of the second PPDU.

50. The communications device according to claim 49, wherein the second PPDU carries a multi-AP trigger frame that triggers the first PPDU.

51. The communications device according to claim 49 or 50, wherein the second PPDU is in an SU transmission format.

52. The communications device according to claim 49 or 50, wherein a quantity of bits of the scrambling initial value of the second PPDU is a first bit quantity, a quantity of bits of the scrambling initial value of the first PPDU is a second bit quantity, and the first bit quantity is greater than or equal to the second bit quantity.

53. The communications device according to claim 52, wherein a type of the second PPDU is extremely high throughput multi-user physical layer protocol data unit EHT MU PPDU or UHR MU PPDU.

54. The communications device according to claim 52 or 53, wherein when the first bit quantity is greater than the second bit quantity, the scrambling initial value of the first PPDU is a value corresponding to the first N scrambling initialization bits of the second PPDU scrambling initial value, and N is equal to the second bit quantity.

55. The communications device according to claim 52, wherein the first N scrambling initialization bits of the second PPDU scrambling initial value are set to a pseudo random non-zero state.

56. The communications device according to claim 49 or 50, wherein a bit quantity of the scrambling initial value of the second PPDU is a first bit quantity, a bit quantity of the scrambling initial value of the first PPDU is a second bit quantity, in a case in which the first bit quantity is less than the second bit quantity, a value corresponding to the first M scrambling initialization bits of the scrambling initial value of the first PPDU is a scrambling initial value of the second PPDU, a value corresponding to remaining bits of the scrambling initial value of the first PPDU is a first integer, and M is equal to the first bit quantity.

57. The communications device according to any one of claims 43 to 48, wherein the first indication information is carried in a backhaul message between the first device and the second device.

58. The communications device according to claim 57, wherein the first indication information comprises identification information of the target user and a scrambling initial value corresponding to the target user, and the scrambling initial value of the first PPDU is determined according to the scrambling initial value corresponding to the target user.

59. The communications device according to claim 57 or 58, wherein the backhaul message further comprises one or more of the following information:
first identification information of the target user;
a BBS color of a basic service set BBS associated with the target user;
a physical layer service data unit PSDU of the target user;
second identification information of one or more target users of the multi-AP joint transmission;
a VBSS color of a virtual basic service set VBSS formed by the multiple APs and a user associated with the multiple APs; or
PSDU of the one or more target users.

60. The communications device according to any one of claims 43 to 59, wherein when the second device is an ultra-high reliability UHR device, and the first PPDU is of a very high-throughput VHT type, a value of a transmit vector TXVECTOR parameter scrambler initial value SCRAMBLER_INITIAL_VALUE is a first value.

61. The communications device according to any one of claims 43 to 60, wherein when the second device is a UHR device, and the first PPDU is of a high-efficiency HE type, a value of a TXVECTOR parameter SCRAMBLER_INITIAL_VALUE is a second value.

62. The communications device according to any one of claims 43 to 61, wherein when the second device is a UHR device, and the first PPDU is of an extremely high throughput EHT type, a value of a TXVECTOR parameter SCRAMBLER_INITIAL_VALUE is a third value.

63. The communications device according to any one of claims 43 to 62, wherein when the second device is an UHR device, and the first PPDU is an UHR type, a value of a TXVECTOR parameter SCRAMBLER_INITIAL_VALUE is a fourth value, and a value of a receive vector RXVECTOR parameter SCRAMBLER_INITIAL_VALUE is a fifth value.

64. A communications device, wherein the communications device is a second device, and the communications device comprises:
a receiving unit, configured to receive first indication information sent by a first device;
wherein the second device sends data to a target user by means of multi access point AP joint transmission, wherein the first indication information is used to indicate a scrambling initial value of a first physical layer protocol data unit PPDU sent by the multi-AP joint transmission.

65. The communications device according to claim 64, wherein a type of the first PPDU is indicated by second indication information.

66. The communications device according to claim 65, wherein the second indication information is indicated by a multi-AP trigger frame triggering the first PPDU.

67. The communications device according to claim 66, wherein the second indication information is carried in a first field, and the first field is located in a common information field or a special user information field.

68. The communications device according to claim 64, wherein types of multiple PPDUs sent by the multi-AP joint transmission are all a first type.

69. The communications device according to claim 68, wherein the first type is ultra-high-reliability multi-user physical layer protocol data unit UHR MU PPDU.

70. The communications device according to any one of claims 64 to 69, wherein the first indication information is carried in a second PPDU, and the first indication information is determined by using a scrambling initial value of the second PPDU.

71. The communications device according to claim 70, wherein the second PPDU carries a multi-AP trigger frame that triggers the first PPDU.

72. The communications device according to claim 70 or 71, wherein the second PPDU is in an SU transmission format.

73. The communications device according to claim 70 or 71, wherein a quantity of bits of the scrambling initial value of the second PPDU is a first bit quantity, a quantity of bits of the scrambling initial value of the first PPDU is a second bit quantity, and the first bit quantity is greater than or equal to the second bit quantity.

74. The communications device according to claim 73, wherein a type of the second PPDU is extremely high throughput multi-user physical layer protocol data unit EHT MU PPDU or UHR MU PPDU.

75. The communications device according to claim 73 or 74, wherein when the first bit quantity is greater than the second bit quantity, the scrambling initial value of the first PPDU is a value corresponding to the first N scrambling initialization bits of the second PPDU scrambling initial value, and N is equal to the second bit quantity.

76. The communications device according to claim 75, wherein the first N scrambling initialization bits of the second PPDU scrambling initial value are set to a pseudo-random non-zero state.

77. The communications device according to claim 70 or 71, wherein a bit quantity of the scrambling initial value of the second PPDU is a first bit quantity, a bit quantity of the scrambling initial value of the first PPDU is a second bit quantity, in a case in which the first bit quantity is less than the second bit quantity, a value corresponding to the first M scrambling initialization bits of the scrambling initial value of the first PPDU is a scrambling initial value of the second PPDU, a value corresponding to remaining bits of the scrambling initial value of the first PPDU is a first integer, and M is equal to the first bit quantity.

78. The communications device according to any one of claims 64 to 69, wherein the first indication information is carried in a backhaul message between the first device and the second device.

79. The communications device according to claim 78, wherein the first indication information comprises identification information of the target user and a scrambling initial value corresponding to the target user, and the scrambling initial value of the first PPDU is determined according to the scrambling initial value corresponding to the target user.

80. The communications device according to claim 78 or 79, wherein the backhaul message further comprises one or more of the following information:
first identification information of the target user;
a BBS color of a basic service set BBS associated with the target user;
a physical layer service data unit PSDU of the target user;
second identification information of one or more target users of the multi-AP joint transmission;
a VBSS color of a virtual basic service set VBSS formed by the multiple APs and a user associated with the multiple APs; or
a PSDU of the one or more target users.

81. The communications device according to any one of claims 64 to 80, wherein when the second device is an ultra-high reliability UHR device, and the first PPDU is of a very high-throughput VHT type, a value of a transmit vector TXVECTOR parameter scrambler initial value SCRAMBLER_INITIAL_VALUE is a first value.

82. The communications device according to any one of claims 64 to 81, wherein when the second device is a UHR device, and the first PPDU is of a high-efficiency HE type, a value of a TXVECTOR parameter SCRAMBLER_INITIAL_VALUE is a second value.

83. The communications device according to any one of claims 64 to 82, wherein when the second device is a UHR device, and the first PPDU is of an extremely high throughput EHT type, a value of a TXVECTOR parameter SCRAMBLER_INITIAL _VALUE is a third value.

84. The communications device according to any one of claims 64 to 83, wherein when the second device is a UHR device, and the first PPDU is of a UHR type, a value of a TXVECTOR parameter SCRAMBLER_INITIAL_VALUE is a fourth value, and a value of a receive vector RXVECTOR parameter SCRAMBLER_INITIAL _VALUE is a fifth value.

85. A communications device, comprising a memory and a processor, wherein the memory is configured to store a program, and the processor is configured to invoke the program in the memory, so that the communications device executes the method according to any one of claims 1 to 42.

86. An apparatus, comprising a processor, configured to invoke a program from a memory, so that the apparatus executes the method according to any one of claims 1 to 42.

87. A chip, comprising a processor, configured to invoke a program from a memory, so that a device installed with the chip performs the method according to any one of claims 1to 42.

88. A computer readable storage medium, wherein a program is stored on the computer, and the program causes a computer to execute the method according to any one of claims 1to 42.

89. A computer program product, comprising a program, wherein the program causes a computer to execute the method according to any one of claims 1to 42.

90. A computer program, wherein the computer program causes a computer to execute the method according to any one of claims 1to 42.
